# EUROPEAN PATENT SPECIFICATION

(11) **EP 4 158 371 B1**
(45) Date of publication and mention of the grant of the patent: **11.09.2024**
(21) Application number: 21814508.4
(22) Date of filing: 25.05.2021
(51) Int. Cl.: G01S 3/72, G01S 3/48

(54) **RADIO DIRECTION-FINDING SYSTEM AND METHODS**
FUNKRICHTUNGSFINDUNGSSYSTEM UND -VERFAHREN
SYSTÈME ET PROCÉDÉS DE RADIOGONIOMÉTRIE

(30) Priority: 27.05.2020 IL 27499920
(43) Date of publication of application: 05.04.2023
(73) Proprietor: Elbit Systems EW And Sigint - Elisra Ltd., 3100401 Haifa (IL)
(72) Inventor: DASHT, Guy, Moshe, 3100401, Israel 3100401 Haifa (IL); HARPAZ, Nir, 3100401, Israel 3100401 Haifa (IL); ALUSH, Henry, Victor, 3100401, Israel 3100401 Haifa (IL); LEVY, Israel, 3100401, Israel 3100401 Haifa (IL)
(74) Representative: Studio Torta S.p.A.
(86) International application number: PCT/IL2021/050617
(87) International publication number: WO 2021/240518

(56) References cited:
- JP-A- 2009 300 161
- US-A- 4 103 304
- US-A1- 2004 160 364
- US-A1- 2019 297 454

## Description

### TECHNICAL FIELD

The invention relates to a radio direction-finding system and methods.

### BACKGROUND

Current radio direction-finding (RDF) systems are capable of immediately and precisely finding a location of a transmitting entity that transmits radio signals. However, such RDF systems require extensive hardware and processing resources, and accordingly are very expensive and have a high power consumption.

There is thus a need in the art for a new radio direction-finding system and methods.

References considered to be relevant as background to the presently disclosed subject matter are listed below. Acknowledgement of the references herein is not to be inferred as meaning that these are in any way relevant to the patentability of the presently disclosed subject matter.

U.S. Patent Application Publication No. 2003/0063029, published on April 3, 2003, relates to a process for locating radio sources by means of a two-channel high resolution radiogoniometer comprising a network of a specified number of sensors. The process comprises at least the following steps: multiplexing the signals supplied by the sensors on the inputs of only two receivers; and estimating with the aid of a calculation device coupled to the outputs of the two receivers the angles of arrival of the waves emitted by the sources on the basis of an estimation of the covariance matrix of the signals supplied by the two receivers.

German Patent No. 3,639,057, published on April 14, 1988, discloses that in order to compensate for interfering FM or PM modulation of the direction-finding signal of a radio direction finder, the direction-finding signal from the direction-finding antenna is mixed with the reference signal from a reference antenna in accordance with the quadrature principle, and the direction-finding information is determined from the complex quadrature components which are thus directly obtained.

U.S. Patent Application Publication No. 2002//0190902, published on December 19, 2002, discloses a method of determining the angle of arrival of a signal, the method comprising the steps of: providing a plurality of antennae; sampling, in turn, the output from each of the antennae, to obtain a set of samples, each of the samples relating to different points in time; performing a Fourier transform on the set of samples, thereby producing a sequence of spectral lines; identifying a signal impinging on the antennae from the configuration of the spectral lines; and calculating, from phase and amplitude data gathered from at least a subset of the spectral lines, the direction of arrival of the signal at the antennae.

Papandreou, "Design and Prototype Development of an Optimum Symmetrical Number System Direction Finding Array", Naval Postgraduate School, Monterey, California, March 1997, describes one method of estimating the direction of an electromagnetic source based on phase comparison. The design and fabrication of a prototype antenna to demonstrate a new DF antenna architecture is described. Four antenna elements are grouped into three pairs with element spacing according to a set of symmetrical number system pairwise relatively prime moduli. The phase difference between each pair of elements is a symmetrical folding waveform that is determined using a mixer.

U.S. Patent No. 6,914,559, published on July 5, 2005, discloses, in an interferometer system, a revolving antenna array to sufficiently resolve all ambiguities in determination of frequency and direction of arrival of a wave-front. The frequency and direction of arrival are determined by matching predicted phase difference codes with an actual code measured at the antenna array, utilizing a cross-correlation technique. The number of parameters that can be simultaneously uniquely determined by the system depends on if the antenna array is rotated in planar or conical surfaces, and if the cross-correlation is uni- or multi-dimensional. The antenna array may include more than one baselines to enhance the system sensitivity and finding capacity.

Korean Patent Application Publication No. 2008/0090914, published on October 9, 2008, relates to an apparatus and a method for recognizing a direction of a smart antenna. The apparatus for recognizing a direction of a signal in a smart antenna includes a plurality of antennas arranged in series in a predetermined method and a preconfigured database, a storage unit, a wireless DC converter converting a composite signal of the received signals transmitted to the arranged antenna into a DC signal and receiving the DC signal from the wireless DC converter to obtain a magnitude value of the DC signal, and a controller configured to retrieve a value from the database and determine a phase difference between the received signals corresponding to the magnitude value and a direction in which the received signals are input to the antennas. Accordingly, the phase difference information of the signals received from the smart antenna can be found in the high frequency band.

Chinese Patent Application Publication No. 102565756, published on July 11, 2012, relates to the field of radiolocation direction-finding systems, and aims to provide a single-channel radiolocation direction-finding system and a direction-finding method thereof. The single-channel radiolocation direction-finding system is characterized by comprising a direction-finding antenna array, a single-channel receiver with the functions of filtration, amplification, frequency conversion and amplitude limitation, and a direction-finding microprocessor for A/D sampling and digital signal processing, wherein the direction-finding antenna array mainly comprises N identical antenna units which are arranged on the circumference of a concentric circle, wherein N is greater than or equal to 3; and each antenna unit is connected with the single-channel receiver through a radio-frequency electronic switch. A single-channel radio direction-finding technology is combined with a phase interference method and a Doppler direction-finding principle, and only needs one single-channel receiver with the functions of filtration, amplification, frequency conversion and amplitude limitation.

U.S. Patent No. 5,497,161, published on March 5, 1996, receives data via a plurality of antennas, and uses a switching network to couple the antennas to a single receiver and a single analog-to-digital converter to digitize the incoming signal. In the receiver, the incident radiation is mixed with a local oscillator signal and down converted to an intermediate frequency (IF). This IF signal is discretely sampled in the analog-to-digital converter, and further processing is done using digital techniques. The incoming signal has to be phase compared to obtain the angle of arrival. Different delay times are used to receive the digital data from the different antennas at the same sampling times, with the data aligned according to the time axis. The frequency of the incoming signals can then be detected by performing a Fast Fourier Transform (FFT) on the data from one antenna with respect to time. Once the primary frequencies are determined, one can find the related amplitudes of the data from the other antennas. An FFT can then be performed on the amplitude values found. The output of this FFT gives the phase information related to the incoming signals and thus the solution to the Angle of Arrival (AOA) problem.

U.S. Patent No. 6,271,791, published on August 7, 2001, discloses performing radio-signal direction finding in the following manner. There are a plurality of antennas at different locations. A switchable antenna coupler switches from one antenna being coupled to a radio-signal input, to another antenna being coupled to the radio-signal input. A radio-signal processor processes a radio signal which is present at the radio-signal input so as to obtain a phase-detection input signal. A phase-change detector detects a phase change in the phase-detection input signal due to the switching from the one antenna to the other antenna. A calculator calculates the direction of the radio-signal source on the basis of this phase change.
U.S. Patent No. 7,612,715, published on November 3, 2009, discloses direction findings by radio, and comprises arranging an array of antennas to receive signals from emitters, selecting individual antenna signals using a first multipole switch and determining antenna signal strengths. Individual antenna signals are also selected by multipole switch, which routes a selected signal to a third multipole switch. The third switch switches a phase shifter into and out of an antenna signal path. An adder is employed to add an antenna signal in a first signal path extending via the first multipole switch to a different antenna signal in a second signal path extending via the second and third switches. This determines combined signal strengths between pairs of antenna signals, one of which either has or has not been relatively phase shifted depending on the third switch position. Covariance matrix elements are determined from signal strengths enabling emitter bearings to be derived.
US4103304A discloses a direction locating system, US2019297454A1 discloses a method and system for creating micro location zones by defining virtual boundaries using a system of one or more transmitters and receivers with one or more spatially-correlated antennas and US2004160364A1 discloses a digital instantaneous direction finding system.

### GENERAL DESCRIPTION

In accordance with a first aspect of the presently disclosed subject matter, there is provided an antenna and receiver system, the antenna and receiver system comprising: a first antenna array comprising a first plurality of antennas facing a first direction, the first plurality of antennas comprising: at least one main first antenna; and one or more summation first antennas; at least one first radio-frequency (RF) receive path connected to the main first antenna only; a second antenna array comprising a second plurality of antennas facing a second direction that is substantially opposite the first direction, the second antenna array being positioned substantially opposite the first antenna array, and the second plurality of antennas comprising: at least one main second antenna; and one or more summation second antennas; at least one second RF receive path connected to the main second antenna only; and one or more common RF receive paths, each common RF receive path of the common RF receive paths being connected to a distinct pair of substantially oppositely-positioned antennas comprising a given summation first antenna of the summation first antennas and a given summation second antenna of the summation second antennas, so that a first signal received by the given summation first antenna and a second signal received by the given summation second antenna are combined into a respective common signal.

In some cases, each of the common RF receive paths, the first RF receive path and the second RF receive path include: a RF front-end, a down-converter, an analog to digital converter and an intermediate-frequency (IF) processing resource.

In some cases, the antenna and receiver system further comprises: a third antenna array comprising a third plurality of antennas facing a third direction, substantially perpendicular to the first direction and to the second direction, the third plurality of antennas comprising: at least one main third antenna; and one or more summation third antennas; at least one third RF receive path connected to the main third antenna only; a fourth antenna array comprising a fourth plurality of antennas facing a fourth direction that is substantially opposite the third direction, the fourth antenna array being positioned substantially opposite the third antenna array, and the fourth plurality of antennas comprising: at least one main fourth antenna; and one or more summation fourth antennas; at least one fourth RF receive path connected to the main fourth antenna only; and one or more second common RF receive paths, each second common RF receive path of the second common RF receive paths being connected to a second distinct pair of substantially oppositely-positioned antennas comprising a given summation third antenna of the summation third antennas and a given summation fourth antenna of the summation fourth antennas, so that a third signal received by the given summation third antenna and a fourth signal received by the given summation fourth antenna are combined into a respective second common signal.

In some cases, each of the common RF receive paths, the second common RF receive paths, the first RF receive path, the second RF receive path, the third receive path and the fourth receive path include: a RF front-end, a down-converter, an analog to digital converter and an intermediate-frequency (IF) processing resource.

In some cases, a combination of the first antenna array, the second antenna array, the third antenna array and the fourth antenna array covers 360 degrees.

In accordance with a second aspect of the presently disclosed subject matter, there is provided a radio direction-finding system, comprising: an antenna and receiver system, the antenna and receiver system comprising: a first antenna array comprising a first plurality of antennas facing a first direction, the first plurality of antennas comprising: at least one main first antenna; and one or more summation first antennas; at least one first radio-frequency (RF) receive path connected to the main first antenna only; a second antenna array comprising a second plurality of antennas facing a second direction that is substantially opposite the first direction, the second antenna array being positioned substantially opposite the first antenna array, and the second plurality of antennas comprising: at least one main second antenna; and one or more summation second antennas; at least one second RF receive path connected to the main second antenna only; and one or more common RF receive paths, each common RF receive path of the common RF receive paths being connected to a distinct pair of substantially oppositely-positioned antennas comprising a given summation first antenna of the summation first antennas and a given summation second antenna of the summation second antennas, so that a first signal received by the given summation first antenna and a second signal received by the given summation second antenna are combined into a respective common signal; and a processing circuitry configured to: receive (A) main output signals from (a) the first RF receive path, and (b) the second RF receive path, and (B) common output signals from the common RF receive paths; upon a transmitting entity transmitting radio signals from a given direction, being substantially the first direction or substantially the second direction, analyze the main output signals to provide a coarse determination of the given direction; and upon providing the coarse determination of the given direction, provide a fine determination of the given direction utilizing the common output signals and a selected main output signal, of the main output signals, associated with the coarse determination of the given direction.

In some cases, the coarse determination is provided by performing amplitude-based coarse direction-finding.

In some cases, the fine determination is provided by performing interferometry.

In accordance with a third aspect of the presently disclosed subject matter, there is provided a radio direction-finding system, comprising an antenna and receiver system, the antenna and receiver system comprising: a first antenna array comprising a first plurality of antennas facing a first direction, the first plurality of antennas comprising: at least one main first antenna; and one or more summation first antennas; at least one first radio-frequency (RF) receive path connected to the main first antenna only; a second antenna array comprising a second plurality of antennas facing a second direction that is substantially opposite the first direction, the second antenna array being positioned substantially opposite the first antenna array, and the second plurality of antennas comprising: at least one main second antenna; and one or more summation second antennas; at least one second RF receive path connected to the main second antenna only; one or more common RF receive paths, each common RF receive path of the common RF receive paths being connected to a distinct pair of substantially oppositely-positioned antennas comprising a given summation first antenna of the summation first antennas and a given summation second antenna of the summation second antennas, so that a first signal received by the given summation first antenna and a second signal received by the given summation second antenna are combined into a respective common signal; a third antenna array comprising a third plurality of antennas facing a third direction, substantially perpendicular to the first direction and to the second direction, the third plurality of antennas comprising: at least one main third antenna; and one or more summation third antennas; at least one third RF receive path connected to the main third antenna only; a fourth antenna array comprising a fourth plurality of antennas facing a fourth direction that is substantially opposite the third direction, the fourth antenna array being positioned substantially opposite the third antenna array, and the fourth plurality of antennas comprising: at least one main fourth antenna; and one or more summation fourth antennas; at least one fourth RF receive path connected to the main fourth antenna only; and one or more second common RF receive paths, each second common RF receive path of the second common RF receive paths being connected to a second distinct pair of substantially oppositely-positioned antennas comprising a given summation third antenna of the summation third antennas and a given summation fourth antenna of the summation fourth antennas, so that a third signal received by the given summation third antenna and a fourth signal received by the given summation fourth antenna are combined into a respective second common signal; and a processing circuitry configured to: receive (A) main output signals from (a) the first RF receive path, (b) the second RF receive path, (c) the third RF receive path and (d) the fourth RF receive path, and (B) common output signals from (e) the common RF receive paths and (f) the second common RF receive paths; upon a transmitting entity transmitting radio signals from a given direction, analyze the main output signals to provide a coarse determination of the given direction; and upon providing the coarse determination of the given direction, provide a fine determination of the given direction utilizing the common output signals associated with the coarse determination of the given direction, and a selected main output signal, of the main output signals, associated with the coarse determination of the given direction.

In some cases, the coarse determination is provided by performing amplitude-based coarse direction-finding.

In some cases, the fine determination is provided by performing interferometry.

In accordance with a fourth aspect of the presently disclosed subject matter, there is provided a radio direction-finding method, comprising: receiving (A) main output signals from (a) at least one first radio-frequency (RF) receive path, and (b) at least one second RF receive path, and (B) common output signals from one or more common RF receive paths; upon a transmitting entity transmitting radio signals from a given direction, being substantially a first direction or substantially a second direction that is substantially opposite the first direction, analyzing the main output signals to provide a coarse determination of the given direction; and upon providing the coarse determination of the given direction, providing a fine determination of the given direction utilizing the common output signals and a selected main output signal, of the main output signals, associated with the coarse determination of the given direction; wherein the first RF receive path is connected to a main first antenna only, the main first antenna being included in a first antenna array comprising a first plurality of antennas facing the first direction; wherein the second RF receive path is connected to a main second antenna only, the main second antenna being included in a second antenna array comprising a second plurality of antennas facing the second direction, the second antenna array being positioned substantially opposite the first antenna array; and wherein each common RF receive path of the common RF receive paths is connected to a distinct pair of substantially oppositely-positioned antennas comprising a given summation first antenna of one or more summation first antennas of the first plurality of antennas and a given summation second antenna of one or more summation second antennas of the second plurality of antennas, so that a first signal received by the given summation first antenna and a second signal received by the given summation second antenna are combined into a respective common signal.

In some cases, each of the common RF receive paths, the first RF receive path and the second RF receive path include: a RF front-end, a down-converter, an analog to digital converter and an intermediate-frequency (IF) processing resource.

In some cases, the coarse determination is provided by performing amplitude-based coarse direction-finding (DF).

In some cases, the fine determination is provided by performing interferometry.

In accordance with a fifth aspect of the presently disclosed subject matter, there is provided a radio direction-finding method, comprising: receiving (A) main output signals from (a) at least one first radio-frequency (RF) receive path, (b) at least one second RF receive path, (c) at least one third RF receive path and (d) at least one fourth RF receive path, and (B) common output signals from (e) one or more common RF receive paths and (f) one or more second common RF receive paths; upon a transmitting entity transmitting radio signals from a given direction, analyzing the main output signals to provide a coarse determination of the given direction; and upon providing the coarse determination of the given direction, providing a fine determination of the given direction utilizing the common output signals associated with the coarse determination of the given direction, and a selected main output signal, of the main output signals, associated with the coarse determination of the given direction; wherein the first RF receive path is connected to a main first antenna only, the main first antenna being included in a first antenna array comprising a first plurality of antennas facing a first direction; wherein the second RF receive path is connected to a main second antenna only, the main second antenna being included in a second antenna array comprising a second plurality of antennas facing a second direction that is substantially opposite the first direction, the second antenna array being positioned substantially opposite the first antenna array; wherein each common RF receive path of the common RF receive paths is connected to a distinct pair of substantially oppositely-positioned antennas comprising a given summation first antenna of one or more summation first antennas of the first plurality of antennas and a given summation second antenna of one or more summation second antennas of the second plurality of antennas, so that a first signal received by the given summation first antenna and a second signal received by the given summation second antenna are combined into a respective common signal; wherein the third RF receive path is connected to a main third antenna only, the main third antenna being included in a third antenna array comprising a third plurality of antennas facing a third direction, substantially perpendicular to the first direction and to the second direction; wherein the fourth RF receive path is connected to a main fourth antenna only, the main fourth antenna being included in a fourth antenna array comprising a fourth plurality of antennas facing a fourth direction that is substantially opposite the third direction, the fourth antenna array being positioned substantially opposite the third antenna array; and wherein each second common RF receive path of the second common RF receive paths is connected to a second distinct pair of substantially oppositely-positioned antennas comprising a given summation third antenna of summation third antennas of the third plurality of antennas and a given summation fourth antenna of summation fourth antennas of the fourth plurality of antennas, so that a third signal received by the given summation third antenna and a fourth signal received by the given summation fourth antenna are combined into a respective second common signal.

In some cases, each of the common RF receive paths, each of the second common RF receive paths, the first RF receive path, the second RF receive path, the third RF receive path and the fourth RF receive path include: a RF front-end, a down-converter, an analog to digital converter and an intermediate-frequency (IF) processing resource.

In some cases, a combination of the first antenna array, the second antenna array, the third antenna array and the fourth antenna array covers 360 degrees.

In some cases, the coarse determination is provided by performing amplitude-based coarse direction-finding.

In some cases, the fine determination is provided by performing interferometry.

In accordance with a sixth aspect of the presently disclosed subject matter, there is provided a non-transitory computer readable storage medium having computer readable program code embodied therewith, the computer readable program code, executable by processing circuitry of a computer to perform a radio direction-finding method, comprising: receiving (A) main output signals from (a) at least one first radio-frequency (RF) receive path, and (b) at least one second RF receive path, and (B) common output signals from one or more common RF receive paths; upon a transmitting entity transmitting radio signals from a given direction, being substantially a first direction or substantially a second direction that is substantially opposite the first direction, analyzing the main output signals to provide a coarse determination of the given direction; and upon providing the coarse determination of the given direction, providing a fine determination of the given direction utilizing the common output signals and a selected main output signal, of the main output signals, associated with the coarse determination of the given direction; wherein the first RF receive path is connected to a main first antenna only, the main first antenna being included in a first antenna array comprising a first plurality of antennas facing the first direction; wherein the second RF receive path is connected to a main second antenna only, the main second antenna being included in a second antenna array comprising a second plurality of antennas facing the second direction, the second antenna array being positioned substantially opposite the first antenna array; and wherein each common RF receive path of the common RF receive paths is connected to a distinct pair of substantially oppositely-positioned antennas comprising a given summation first antenna of one or more summation first antennas of the first plurality of antennas and a given summation second antenna of one or more summation second antennas of the second plurality of antennas, so that a first signal received by the given summation first antenna and a second signal received by the given summation second antenna are combined into a respective common signal.

In accordance with a seventh aspect of the presently disclosed subject matter, there is provided a non-transitory computer readable storage medium having computer readable program code embodied therewith, the computer readable program code, executable by processing circuitry of a computer to perform a radio direction-finding method, comprising: receiving (A) main output signals from (a) at least one first radio-frequency (RF) receive path, (b) at least one second RF receive path, (c) at least one third RF receive path and (d) at least one fourth RF receive path, and (B) common output signals from (e) one or more common RF receive paths and (f) one or more second common RF receive paths; upon a transmitting entity transmitting radio signals from a given direction, analyzing the main output signals to provide a coarse determination of the given direction; and upon providing the coarse determination of the given direction, providing a fine determination of the given direction utilizing the common output signals associated with the coarse determination of the given direction, and a selected main output signal, of the main output signals, associated with the coarse determination of the given direction; wherein the first RF receive path is connected to a main first antenna only, the main first antenna being included in a first antenna array comprising a first plurality of antennas facing a first direction; wherein the second RF receive path is connected to a main second antenna only, the main second antenna being included in a second antenna array comprising a second plurality of antennas facing a second direction that is substantially opposite the first direction, the second antenna array being positioned substantially opposite the first antenna array; wherein each common RF receive path of the common RF receive paths is connected to a distinct pair of substantially oppositely-positioned antennas comprising a given summation first antenna of one or more summation first antennas of the first plurality of antennas and a given summation second antenna of one or more summation second antennas of the second plurality of antennas, so that a first signal received by the given summation first antenna and a second signal received by the given summation second antenna are combined into a respective common signal; wherein the third RF receive path is connected to a main third antenna only, the main third antenna being included in a third antenna array comprising a third plurality of antennas facing a third direction, substantially perpendicular to the first direction and to the second direction; wherein the fourth RF receive path is connected to a main fourth antenna only, the main fourth antenna being included in a fourth antenna array comprising a fourth plurality of antennas facing a fourth direction that is substantially opposite the third direction, the fourth antenna array being positioned substantially opposite the third antenna array; and wherein each second common RF receive path of the second common RF receive paths is connected to a second distinct pair of substantially oppositely-positioned antennas comprising a given summation third antenna of summation third antennas of the third plurality of antennas and a given summation fourth antenna of summation fourth antennas of the fourth plurality of antennas, so that a third signal received by the given summation third antenna and a fourth signal received by the given summation fourth antenna are combined into a respective second common signal.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of an example of a first antenna system, in accordance with the presently disclosed subject matter;
**Fig. 2** is a schematic illustration of an example of a second antenna system, in accordance with the presently disclosed subject matter;
**Fig. 3** is a block diagram schematically illustrating an example of an antenna and receiver system, in accordance with the presently disclosed subject matter;
**Fig. 4** is a block diagram schematically illustrating an example of a radio direction-finding system, in accordance with the presently disclosed subject matter;
**Fig. 5** is a flowchart illustrating an example of a first radio direction-finding method, in accordance with the presently disclosed subject matter; and
**Fig. 6** is a flowchart illustrating an example of a second radio direction-finding method, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "combining", "receiving", "analyzing", "performing" or the like, include actions and/or processes, including, inter alia, actions and/or processes of a computer, that manipulate and/or transform data into other data, said data represented as physical quantities, e.g. such as electronic quantities, and/or said data representing the physical objects. The terms "computer", "processor", "processing circuitry" and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field-programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable subcombination.

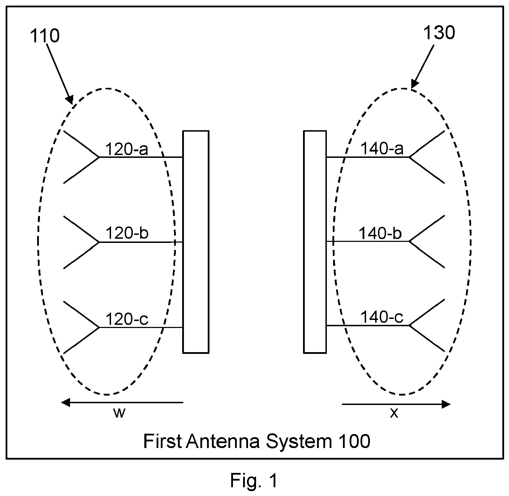

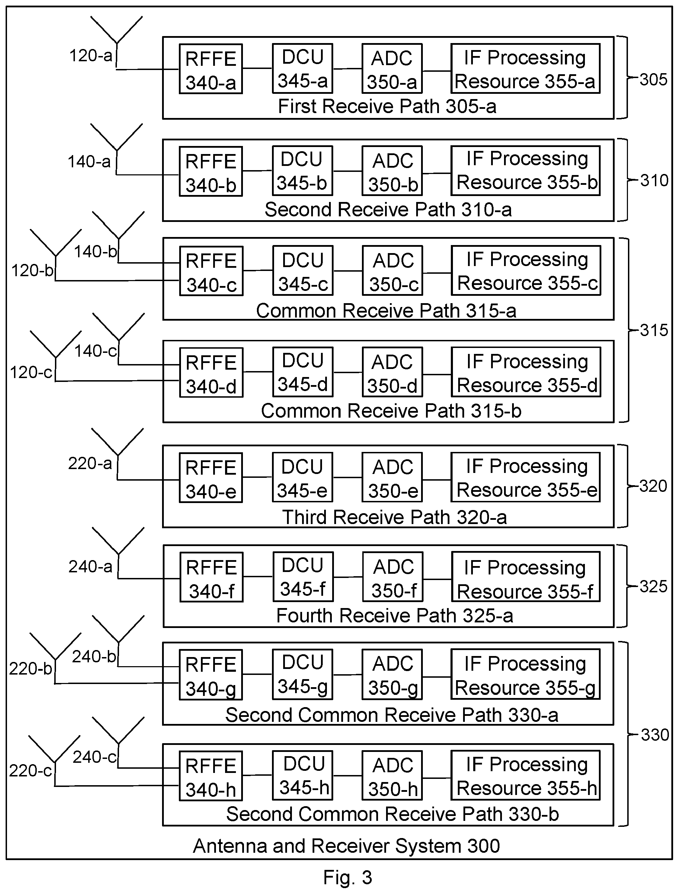

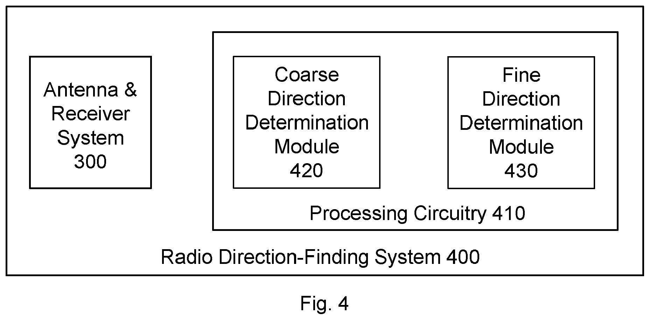

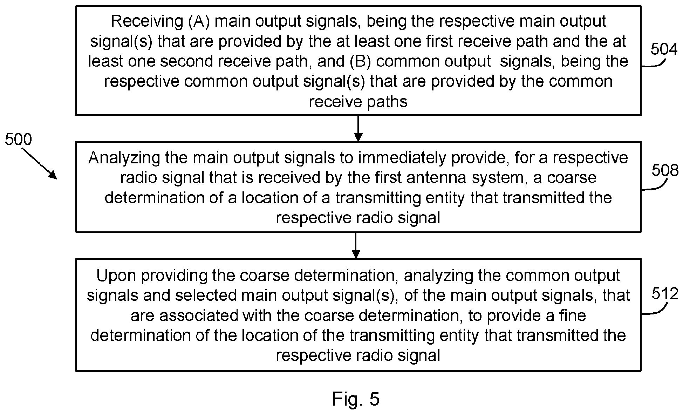

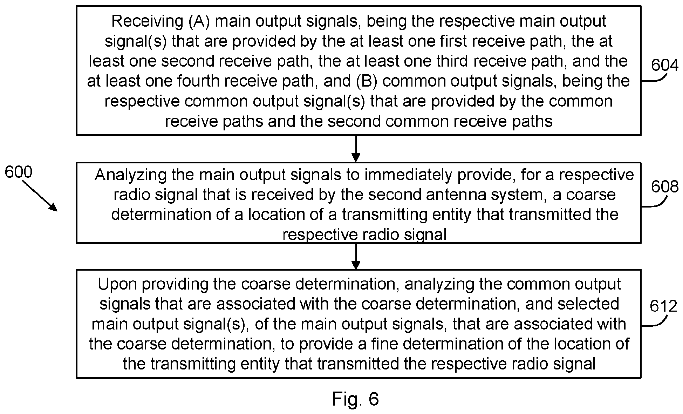

In embodiments of the presently disclosed subject matter, fewer, more and/or different stages than those shown in **Figs. 5** **and** **6** may be executed. In embodiments of the presently disclosed subject matter one or more stages illustrated in **Figs. 5** **and** **6** may be executed in a different order and/or one or more groups of stages may be executed simultaneously. **Figs. 1 to 4** illustrate a general schematic of the system architecture in accordance with embodiments of the presently disclosed subject matter. Each module in **Figs. 3** **and** **4** can be made up of any combination of software, hardware and/or firmware that performs the functions as defined and explained herein. The modules in **Figs. 3** **and** **4** may be centralized in one location or dispersed over more than one location. In other embodiments of the presently disclosed subject matter, the system may comprise fewer, more, and/or different modules than those shown in **Figs. 3** **and** **4****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Attention is now drawn to **Fig. 1**, a schematic illustration of an example of a first antenna system 100, in accordance with the presently disclosed subject matter.

In accordance with the presently disclosed subject matter, first antenna system 100 is configured to include a first antenna array (e.g., antenna array 110) and a second antenna array (e.g., antenna array 130). First antenna array (e.g., antenna array 110) is configured to comprise first antennas (e.g., 120-a, 120-b, 120-c) facing a first direction (e.g., direction 'w'), the first antennas (e.g., 120-a, 120-b, 120-c) comprising: at least one main first antenna (e.g., main first antenna 120-a); and one or more summation first antennas (e.g., 120-b, 120-c).

Second antenna array (e.g., antenna array 130) is configured to comprise second antennas (e.g., 140-a, 140-b, 140-c) facing a second direction (e.g., direction 'x') that is substantially opposite the first direction (e.g., direction 'w'), the second antenna array (e.g., antenna array 130) being positioned substantially opposite the first antenna array (e.g., antenna array 110), and the second antennas (e.g., 140-a, 140-b, 140-c) comprising: at least one main second antenna (e.g., main second antenna 140-a); and one or more summation second antennas (e.g., 140-b, 140-c).

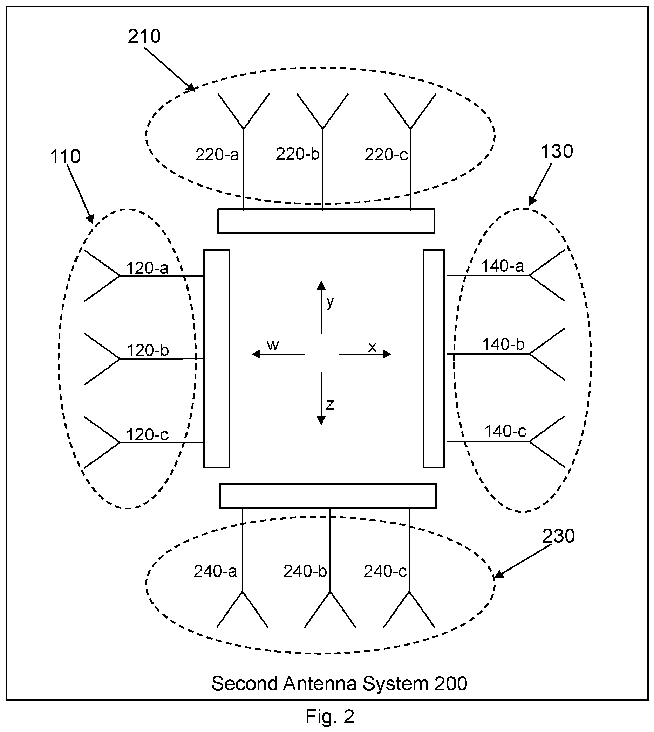

Attention is now drawn to **Fig. 2**, a schematic illustration of an example of a second antenna system 200, in accordance with the presently disclosed subject matter.

In accordance with the presently disclosed subject matter, second antenna system 200 is configured to include a first antenna array (e.g., antenna array 110) and a second antenna array (e.g., antenna array 130), as detailed earlier herein, inter alia with reference to **Fig. 1****.**

Second antenna system 200 is further configured to include a third antenna array (e.g., antenna array 210) and a fourth antenna array (e.g., antenna array 230). Third antenna array (e.g., antenna array 210) is configured to comprise third antennas (e.g., 220-a, 220-b, 220-c) facing a third direction (e.g., direction 'y'), substantially perpendicular to the first direction (e.g., direction 'w') and to the second direction (e.g., direction 'x'), the third antennas (e.g., 220-a, 220-b, 220-c) comprising: at least one main third antenna (e.g., main third antenna 220-a); and one or more summation third antennas (e.g., 220-b, 220-c).

Fourth antenna array (e.g., antenna array 230) is configured to comprise fourth antennas (e.g., 240-a, 240-b, 240-c) facing a fourth direction (e.g., direction 'z') that is substantially opposite the third direction (e.g., direction 'y'), the fourth antenna array (e.g., antenna array 230) being positioned substantially opposite the third antenna array (e.g., antenna array 210), and the fourth antennas (e.g., 240-a, 240-b, 240-c) comprising: at least one main fourth antenna (e.g., main fourth antenna 240-a); and one or more summation fourth antennas (e.g., 240-b, 240-c).

In some cases, as illustrated in **Fig. 2**, a combination of the first antenna array (e.g., antenna array 110), the second antenna array (e.g., antenna array 130), the third antenna array (e.g., antenna array 210) and the fourth antenna array (e.g., antenna array 230) covers 360 degrees.

Attention is now drawn to **Fig. 3**, a block diagram schematically illustrating an example of an antenna and receiver system 300, in accordance with the presently disclosed subject matter.

In accordance with the presently disclosed subject matter, in some cases, antenna and receiver system 300 can be associated with the first antenna system 100. The antenna and receiver system 300 that is associated with the first antenna system 100 is configured to include at least one first radio-frequency (RF) receive path 305 (e.g., first RF receive path 305-a), at least one second RF receive path 310 (e.g., second RF receive path 310-a) and one or more common RF receive paths 315 (e.g., 315-a and 315-b).

The at least one first RF receive path 305 is connected to the at least one main first antenna of the first antenna array (e.g., antenna array 110). In the event that the first antenna array (e.g., antenna array 110) includes a single main first antenna, being, for example, main first antenna 120-a, as in the example of the first antenna system 100 that is illustrated in **Fig. 1** and the example of the second antenna system 200 that is illustrated in **Fig. 2**, a single first RF receive path (e.g., 305-a) is connected to the main first antenna (e.g., main first antenna 120-a) only, as illustrated in **Fig. 3**. Alternatively, in the event that the first antenna array (e.g., antenna array 110) includes two or more main first antennas, a distinct first RF receive path of the first RF receive paths 305 is connected to each main first antenna only.

The at least one second RF receive path 310 is connected to the at least one main second antenna of the second antenna array (e.g., antenna array 130). In the event that the second antenna array (e.g., antenna array 130) includes a single main second antenna, being, for example, main second antenna 140-a, as in the example of the first antenna system 100 that is illustrated in **Fig. 1** and the example of the second antenna system 200 that is illustrated in **Fig. 2**, a single second RF receive path (e.g., 310-a) is connected to the main second antenna (e.g., main second antenna 140-a) only, as illustrated in **Fig. 3****.** Alternatively, in the event that the second antenna array (e.g., antenna array 130) includes two or more main second antennas, a distinct second RF receive path of the second RF receive paths 310 is connected to each main second antenna only.

Each common RF receive path (e.g., 315-a, 315-b) of the common RF receive paths 315 is connected to a distinct pair of substantially oppositely-positioned antennas comprising a given summation first antenna of the summation first antennas (e.g., 120-b, 120-c) in first antenna array (e.g., antenna array 110) and a given summation second antenna of the summation second antennas (e.g., 140-b, 140-c) in second antenna array (e.g., antenna array 130). For example, in the antenna and receiver system 300 that is illustrated in **Fig. 3**, one common RF receive path 315-a of the common RF receive paths 315 is connected to summation first antenna 120-b and summation second antenna 140-b, and the other common RF receive path 315-b of the common RF receive paths 315 is connected to summation first antenna 120-c and summation second antenna 140-c. By connecting each common RF receive path (e.g., 315-a, 315-b) to a distinct pair of substantially oppositely-positioned antennas, the number of RF receive paths in the antenna and receiver system 300 can be reduced, thereby reducing the hardware requirements, size, cost and power requirements of the antenna and receiver system 300.

In some cases, antenna and receiver system 300 can be associated with the second antenna system 200. The antenna and receiver system 300 that is associated with the second antenna system 200 is configured to include the at least one first RF receive path 305 (e.g., first RF receive path 305-a), the at least one second RF receive path 310 (e.g., second RF receive path 310-a), the one or more common RF receive paths 315 (e.g., 315-a and 315-b), at least one third RF receive path 320 (e.g., third RF receive path 320-a), at least one fourth RF receive path 325 (e.g., fourth RF receive path 325-a), and one or more second common RF receive paths 330 (e.g., 330-a and 330-b).

The at least one first RF receive path 305 (e.g., first RF receive path 305-a) is connected to the at least one main first antenna (e.g., main first antenna 120-a) of the first antenna array (e.g., antenna array 110), as described earlier herein.

The at least one second RF receive path 310 (e.g., second RF receive path 310-a) is connected to the at least one main second antenna (e.g., main second antenna 140-a) of the second antenna array (e.g., antenna array 130), as described earlier herein.

Each common RF receive path (e.g., 315-a, 315-b) of the common RF receive paths 315 is connected to a distinct pair of substantially oppositely-positioned antennas comprising a given summation first antenna of the summation first antennas (e.g., 120-b, 120-c) in first antenna array (e.g., antenna array 110) and a given summation second antenna of the summation second antennas (e.g., 140-b, 140-c) in second antenna array (e.g., antenna array 130), as described earlier herein.

The at least one third RF receive path 320 is connected to the at least one main third antenna of the third antenna array (e.g., antenna array 210). In the event that the third antenna array (e.g., antenna array 210) includes a single main third antenna, being, for example, main third antenna 220-a, as in the example of the second antenna system 200 that is illustrated in **Fig. 2**, a single third RF receive path (e.g., 320-a) is connected to the main third antenna (e.g., main third antenna 220-a) only, as illustrated in **Fig. 3**. Alternatively, in the event that the third antenna array (e.g., antenna array 210) includes two or more main third antennas, a distinct third RF receive path of the third RF receive paths 320 is connected to each main third antenna only.

The at least one fourth RF receive path 325 is connected to the at least one main fourth antenna of the fourth antenna array (e.g., antenna array 230). In the event that the fourth antenna array (e.g., antenna array 230) includes a single main fourth antenna, being, for example, main fourth antenna 240-a, as in the example of the second antenna system 200 that is illustrated in **Fig. 2**, a single fourth RF receive path (e.g., 325-a) is connected to the main fourth antenna (e.g., main fourth antenna 240-a) only, as illustrated in **Fig. 3**. Alternatively, in the event that the fourth antenna array (e.g., antenna array 230) includes two or more main fourth antennas, a distinct fourth RF receive path of the fourth RF receive paths 325 is connected to each main fourth antenna only.

Each second common RF receive path (e.g., 330-a, 330-b) of the second common RF receive paths 330 is connected to a distinct pair of substantially oppositely-positioned antennas comprising a given summation third antenna of the summation third antennas (e.g., 220-b, 220-c) in third antenna array (e.g., antenna array 210) and a given summation fourth antenna of the summation fourth antennas (e.g., 240-b, 240-c) in fourth antenna array (e.g., antenna array 230). For example, in the antenna and receiver system 300 that is illustrated in **Fig. 3**, one second common RF receive path 330-a of the second common RF receive paths 330 is connected to summation third antenna 220-b and summation fourth antenna 240-b, and the other second common RF receive path 330-b of the second common RF receive paths 330 is connected to summation third antenna 220-c and summation fourth antenna 240-c. By connecting each second common RF receive path (e.g., 330-a, 330-b) to a distinct pair of substantially oppositely-positioned antennas, the number of RF receive paths in the antenna and receiver system 300 can be reduced, thereby reducing the hardware requirements, size, cost and power requirements of the antenna and receiver system 300.

In some cases, as illustrated in **Fig. 3**, each of the at least one first RF receive path 305 (e.g., first RF receive path 305-a), the at least one second RF receive path 310 (e.g., second RF receive path 310-a) and the common RF receive paths 315 (e.g., 315-a and 315-b) can be configured to include: a respective RF front-end (RFFE) (e.g., 340-a, 340-b, 340-c, 340-d), a respective down-converter (DCU) (e.g., 345-a, 345-b, 345-c, 345-d), a respective analog-to-digital converter (ADC) (e.g., 350-a, 350-b, 350-c, 350-d), and a respective intermediate-frequency (IF) processing resource (e.g., 355-a, 355-b, 355-c, 355-d). Moreover, in some cases in which the antenna and receiver system 300 is associated with the second antenna system 200, and as illustrated in **Fig. 3**, each of the at least one third RF receive path 320 (e.g., third RF receive path 320-a), the at least one fourth RF receive path 325 (e.g., fourth RF receive path 325-a) and the second common RF receive paths 330 (e.g., 330-a and 330-b) can be configured to include: a respective RF front-end (RFFE) (e.g., 340-e, 340-f, 340-g, 340-h), a respective down-converter (DCU) (e.g., 345-e, 345-f, 345-g, 345-h), a respective analog-to-digital converter (ADC) (e.g., 350-e, 350-f, 350-g, 350-h), and a respective intermediate-frequency (IF) processing resource (e.g., 355-e, 355-f, 355-g, 355-h).

Each respective RFFE of the at least one first RF receive path 305 (e.g., first RF receive path 305-a), the at least one second RF receive path 310 (e.g., second RF receive path 310-a), the at least one third RF receive path 320 (e.g., third RF receive path 320-a) and the at least one fourth RF receive path 325 (e.g., fourth RF receive path 325-a), for example RFFEs 340-a, 340-b, 340-e and 340-f, is configured to process the radio signal(s) that it receives from its respective main antenna, being the main antenna to which it is connected or coupled, at the original incoming radio frequencies of the radio signal(s). In the antenna and receiver system 300 that is illustrated in **Fig. 3**, RFFE 340-a of the first RF receive path 305-a is configured to process the radio signal(s) that it receives from main first antenna 120-a, and RFFE 340-b of the second RF receive path 310-a is configured to process the radio signal(s) that it receives from main second antenna 140-a. Moreover, in the antenna and receiver system 300 that is illustrated in **Fig. 3**, RFFE 340-e of the third RF receive path 320-a is configured to process the radio signal(s) that it receives from main third antenna 220-a, and RFFE 340-f of the fourth RF receive path 325-a is configured to process the radio signal(s) that it receives from main fourth antenna 240-a.

In addition, each respective RFFE of the common RF receive paths 315, for example RFFEs 340-c and 340-d, is configured to process the radio signals that it receives from its respective summation antennas, being the summation first antenna and the summation second antenna to which it is connected or coupled, at the original incoming radio frequencies of the radio signals. The processing of the radio signals by each respective RFFE of the common RF receive paths 315 includes combining respective first radio signal(s) that are received by the respective RFFE from its respective summation first antenna and respective second radio signal(s) that are received by the respective RFFE from its respective summation second antenna into respective common signal(s). In the antenna and receiver system 300 that is illustrated in **Fig. 3**, RFFE 340-c of the common RF receive path 315-a is configured to process the radio signals that it receives from summation first antenna 120-b and summation second antenna 140-b, including combining respective first radio signal(s) that are received by RFFE 340-c from summation first antenna 120-b and respective second radio signal(s) that are received by RFFE 340-c from summation second antenna 140-b into respective common signal(s). Furthermore, RFFE 340-d of the common RF receive path 315-b is configured to process the radio signals that it receives from summation first antenna 120-c and summation second antenna 140-c, including combining respective first radio signal(s) that are received by RFFE 340-d from summation first antenna 120-c and respective second radio signal(s) that are received by RFFE 340-d from summation second antenna 140-c into respective common signal(s).

Each respective RFFE of the second common RF receive paths 330, for example RFFEs 340-g and 340-h, is configured to process the radio signals that it receives from its respective summation antennas, being the summation third antenna and the summation fourth antenna to which it is connected or coupled, at the original incoming radio frequencies of the radio signals. The processing of the radio signals by each respective RFFE of the second common RF receive paths 330 includes combining respective third radio signal(s) that are received by the respective RFFE from its respective summation third antenna and respective fourth radio signal(s) that are received by the respective RFFE from its respective summation fourth antenna into respective second common signal(s). In the antenna and receiver system 300 that is illustrated in **Fig. 3**, RFFE 340-g of the second common RF receive path 330-a is configured to process the radio signals that it receives from summation third antenna 220-b and summation fourth antenna 240-b, including combining respective third radio signal(s) that are received by RFFE 340-g from summation third antenna 220-b and respective fourth radio signal(s) that are received by RFFE 340-g from summation fourth antenna 240-b into respective second common signal(s). Furthermore, RFFE 340-h of the second common RF receive path 330-b is configured to process the radio signals that it receives from summation third antenna 220-c and summation fourth antenna 240-c, including combining respective third radio signal(s) that are received by RFFE 340-h from summation third antenna 220-c and respective fourth radio signal(s) that are received by RFFE 340-h from summation fourth antenna 240-c into respective second common signal(s).

Each respective down-converter (DCU) of the at least one first RF receive path 305 (e.g., first RF receive path 305-a), the at least one second RF receive path 310 (e.g., second RF receive path 310-a) and the common RF receive paths 315 (e.g., 315-a and 315-b), for example DCUs 345-a, 345-b, 345-c and 345-d, is configured to down-convert, to an intermediate frequency (IF), the RF signal(s) that are output by the respective RFFE (e.g., 340-a, 340-b, 340-c, 340-d) that is connected or coupled to the respective down-converter (DCU) (e.g., 345-a, 345-b, 345-c, 345-d), thereby generating respective IF signal(s). Moreover, each respective down-converter (DCU) of the at least one third RF receive path 320 (e.g., third RF receive path 320-a), the at least one fourth RF receive path 325 (e.g., fourth RF receive path 325-a) and the second common RF receive paths 330 (e.g., 330-a and 330-b), for example DCUs 345-e, 345-f, 345-g and 345-h, is configured to down-convert, to the intermediate frequency (IF), the RF signal(s) that are output by the respective RFFE (e.g., 340-e, 340-f, 340-g, 340-h) that is connected or coupled to the respective down-converter (DCU) (e.g., 345-e, 345-f, 345-g, 345-h), thereby generating respective IF signal(s).

In some cases, one or more of the down-converters (DCUs) in the at least one first RF receive path 305, the at least one second RF receive path 310, the common RF receive paths 315, the at least one third RF receive path 320, the at least one fourth RF receive path 325, or the second common RF receive paths 330 can be configured as an analog down-converter (DCU). For example, in the antenna and receiver system 300 that is illustrated in **Fig. 3**, the down-converters (DCUs) 345-a, 345-b, 345-c, 345-d, 345-e, 345-f, 345-g and 345-h in the first RF receive path 305-a, the second RF receive path 310-a, the common RF receive path 315-a, the common RF receive path 315-b, the third RF receive path 320-a, the fourth RF receive path 325-a, the second common RF receive path 330-a and the second common RF receive path 330-b, respectively, are configured as analog DCUs.

For each of the RF receive paths that includes an analog down-converter (DCU) from among the at least one first RF receive path 305, the at least one second RF receive path 310, the common RF receive paths 315, the at least one third RF receive path 320, the at least one fourth RF receive path 325 and the second common RF receive paths 330, an ADC of the respective RF receive path can be connected or coupled to an output of the analog DCU of the respective RF receive path, and configured to convert the respective IF signal(s) that are generated by such analog DCU to respective digital IF signal(s). Turning again to the antenna and receiver system 300 that is illustrated in **Fig. 3**, the analog-to-digital converters (ADCs) 350-a, 350-b, 350-c, 350-d, 350-e, 350-f, 350-g and 350-h in the first RF receive path 305-a, the second RF receive path 310-a, the common RF receive path 315-a, the common RF receive path 315-b, the third RF receive path 320-a, the fourth RF receive path 325-a, the second common RF receive path 330-a and the second common RF receive path 330-b, respectively, are configured to convert the respective IF signal(s) that are generated by analog DCUs 345-a, 345-b, 345-c, 345-d, 345-e, 345-f, 345-g and 345-h, respectively, to respective digital IF signal(s).

In some cases, one or more of the down-converters (DCUs) in the at least one first RF receive path 305, the at least one second RF receive path 310, the common RF receive paths 315, the at least one third RF receive path 320, the at least one fourth RF receive path 325, or the second common RF receive paths 330 can be configured as a digital down-converter (DCU). For each of the RF receive paths from among the at least one first RF receive path 305, the at least one second RF receive path 310, the common RF receive paths 315, the at least one third RF receive path 320, the at least one fourth RF receive path 325 or the second common RF receive paths 330 that includes a digital DCU, an ADC of the respective RF receive path can be connected or coupled to an output of the RFFE of the respective RF receive path, and configured to convert the respective RF signal(s) that are output by such RFFE to respective digital RF signal(s). The respective digital DCU of the respective RF receive path can be configured to down-convert the respective digital RF signal(s) to respective digital IF signal(s).

Each IF processing resource of the at least one first RF receive path 305 (e.g., first RF receive path 305-a), the at least one second RF receive path 310 (e.g., second RF receive path 310-a), the common RF receive paths 315 (e.g., 315-a and 315-b), the at least one third RF receive path 320 (e.g., third RF receive path 320-a), the at least one fourth RF receive path 325 (e.g., fourth RF receive path 325-a), and the second common RF receive paths 330 (e.g., 330-a and 330-b), for example IF processing resources 355-a, 355-b, 355-c, 355-d, 355-e, 355-f, 355-g and 355-h, can be configured to process the respective digital IF signal(s) that it receives at the intermediate frequency (IF).

Each IF processing resource of the at least one first RF receive path 305 (e.g., first RF receive path 305-a) and the at least one second RF receive path 310 (e.g., second RF receive path 310-a), for example IF processing resources 355-a and 355-b, can be configured to process the respective digital IF signal(s) that it receives at the IF to provide respective main output signal(s). The respective main output signal(s) that are provided by the IF processing resources of the at least one first RF receive path 305 and the at least one second RF receive path 310 can be analyzed for determining a coarse location of one or more transmitting entities that transmit radio signals that are received by the first antenna system 100, as detailed further herein, inter alia with reference to **Fig. 5****.**

Each IF processing resource of the common RF receive paths 315 (e.g., common RF receive paths 315-a and 315-b), for example IF processing resources 355-c and 355-d, can be configured to process the respective digital IF signal(s) that it receives at the IF to provide respective common output signal(s). The respective common output signal(s) that are provided by the IF processing resources of the common RF receive paths 315 can be analyzed for determining a fine location of one or more transmitting entities that transmit radio signals that are received by the first antenna system 100, as detailed further herein, inter alia with reference to **Fig. 5****.**

Each IF processing resource of the at least one third RF receive path 320 (e.g., third RF receive path 320-a) and the at least one fourth RF receive path 325 (e.g., fourth RF receive path 325-a), for example IF processing resources 355-e and 355-f, can be configured to process the respective digital IF signal(s) that it receives at the IF to provide respective main output signal(s). The respective main output signal(s) that are provided by the IF processing resources of the at least one first RF receive path 305, the at least one second RF receive path 310, the at least one third RF receive path 320 and the at least one fourth RF receive path 325, for example IF processing resources 355-a, 355-b, 355-e and 355-f, can be analyzed for determining a coarse location of one or more transmitting entities that transmit radio signals that are received by the second antenna system 200, as detailed further herein, inter alia with reference to **Fig. 6**.

Each IF processing resource of the second common RF receive paths 330 (e.g., second common RF receive paths 330-a and 330-b), for example IF processing resources 355-g and 355-h, can be configured to process the respective digital IF signal(s) that it receives at the IF to provide respective common output signal(s). The respective common output signal(s) that are provided by the IF processing resources of the common RF receive paths 315 and the second common RF receive paths 330, for example IF processing resources 355-c, 355-d, 355-g and 355-h, can be analyzed for determining a fine location of one or more transmitting entities that transmit radio signals that are received by the second antenna system 200, as detailed further herein, inter alia with reference to **Fig. 6**.

Attention is now drawn to **Fig. 4**, a block diagram schematically illustrating an example of a radio direction-finding system 400, in accordance with the presently disclosed subject matter.

In accordance with the presently disclosed subject matter, radio direction-finding system 400 can be configured to include an antenna and receiver system 300, as detailed earlier herein, inter alia with reference to **Figs. 1 to 3****.**

Radio direction-finding system 400 can also be configured to include processing circuitry 410. Processing circuitry 410 can be one or more processing units (e.g. central processing units), microprocessors, microcontrollers (e.g. microcontroller units (MCUs)) or any other computing devices or modules, including multiple and/or parallel and/or distributed processing units, which are adapted to independently or cooperatively process data, including data for finding the direction(s) from which radio signal(s) are received by the antenna and receiver system 300.

Processing circuitry 410 can be configured to include a coarse direction determination module 420 and a fine direction determination module 430.

Coarse direction determination module 420 can be configured, for each of the radio signals that are received by the antenna and receiver system 300, to provide a coarse determination of the given direction from which the respective radio signal was transmitted (e.g., a coarse determination of a location of the transmitting entity that transmitted the respective radio signal), as detailed further herein, inter alia with reference to **Figs. 5** **and** **6****.**

Fine direction determination module 430 can be configured, for each of the radio signals that are received by the antenna and receiver system 300, to provide a fine determination of the given direction from which the respective radio signal was transmitted (e.g., a fine determination of a location of the transmitting entity that transmitted the respective radio signal), as detailed further herein, inter alia with reference to **Figs. 5** **and** **6****.**

Attention is now drawn to **Fig. 5**, a flowchart illustrating an example of a first radio direction-finding method 500, in accordance with the presently disclosed subject matter.

In accordance with the presently disclosed subject matter, first radio direction-finding method 500 is associated with the first antenna system 100 and an antenna and receiver system 300 that only includes the RF receive paths that are connected to the antennas that are included in the first antenna system 100.

To perform the first radio direction-finding method 500, processing circuitry 410 can be configured to receive (A) main output signals, being the respective main output signal(s) that are provided by the at least one first RF receive path 305 and the at least one second RF receive path 310, and (B) common output signals, being the respective common output signal(s) that are provided by the common RF receive paths 315 **(block 504)**.

Processing circuitry 410 can be further configured, e.g. using coarse direction determination module 420, to analyze the main output signals to immediately provide, for a respective radio signal that is received by the first antenna system 100, a coarse determination of a location of a transmitting entity that transmitted the respective radio signal **(block 508).**

In some cases, the coarse determination can be provided by performing amplitude-based (power-based) coarse direction-finding (DF).

Processing circuitry 410 can also be configured, upon providing the coarse determination, to analyze the common output signals and selected main output signal(s), of the main output signals, that are associated with the coarse determination, e.g. using fine direction determination module 430, to provide a fine determination of the location of the transmitting entity that transmitted the respective radio signal **(block 512).**

In some cases, the fine determination can be provided by performing interferometry (e.g., phase interferometry).

Attention is now drawn to **Fig. 6**, a flowchart illustrating an example of a second radio direction-finding method 600, in accordance with the presently disclosed subject matter.

In accordance with the presently disclosed subject matter, second radio direction-finding method 600 is associated with the second antenna system 200 and the antenna and receiver system 300 that is associated with the second antenna system 200.

To perform the second radio direction-finding method 600, processing circuitry 410 can be configured to receive (A) main output signals, being the respective main output signal(s) that are provided by the at least one first RF receive path 305, the at least one second RF receive path 310, the at least one third RF receive path 320, and the at least one fourth RF receive path 325, and (B) common output signals, being the respective common output signal(s) that are provided by the common RF receive paths 315 and the second common RF receive paths 330 **(block 604).**

Processing circuitry 410 can be further configured, e.g. using coarse direction determination module 420, to analyze the main output signals to immediately provide, for a respective radio signal that is received by the second antenna system 200, a coarse determination of a location of a transmitting entity that transmitted the respective radio signal **(block 608).**

In some cases, the coarse determination can be provided by performing amplitude-based (power-based) coarse direction-finding (DF).

Processing circuitry 410 can also be configured, upon providing the coarse determination, to analyze the common output signals that are associated with the coarse determination, and selected main output signal(s), of the main output signals, that are associated with the coarse determination, e.g. using fine direction determination module 430, to provide a fine determination of the location of the transmitting entity that transmitted the respective radio signal **(block 612).**

In some cases, the fine determination can be provided by performing interferometry (e.g., phase interferometry).

It is to be noted that, with reference to **Figs. 5** **and** **6**, some of the blocks can be integrated into a consolidated block or can be broken down to a few blocks and/or other blocks may be added. It should be also noted that whilst the flow diagrams are described also with reference to the system elements that realizes them, this is by no means binding, and the blocks can be performed by elements other than those described herein.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. An antenna and receiver system (300), the antenna and receiver system (300) comprising:
a first antenna array (110) comprising a first plurality of antennas (120-a, 120-b, 120-c) facing a first direction, the first plurality of antennas (120-a, 120-b, 120-c) comprising:
at least one main first antenna (120-a); and
one or more summation first antennas (120-b, 120-c);
at least one first radio-frequency (RF) receive path (305) connected to the main first antenna (120-a) only;
a second antenna array (130) comprising a second plurality of antennas (140-a, 140-b, 140-c) facing a second direction that is substantially opposite the first direction, the second antenna array (130) being positioned substantially opposite the first antenna array (110), and the second plurality of antennas (140-a, 140-b, 140-c) comprising:
at least one main second antenna (140-a); and
one or more summation second antennas (140-b, 140-c) ;
at least one second RF receive path (310) connected to the main second antenna (140-a) only; and
one or more common RF receive paths (315), each common RF receive path of the common RF receive paths (315) being connected to a distinct pair of substantially oppositely-positioned antennas comprising a given summation first antenna of the summation first antennas (120-b, 120-c) and a given summation second antenna of the summation second antennas (140-b, 140-c), so that a first signal received by the given summation first antenna and a second signal received by the given summation second antenna are combined into a respective common signal.

2. The antenna and receiver system (300) of claim 1, further comprising:
a third antenna array (210) comprising a third plurality of antennas (220-a, 220-b, 220-c) facing a third direction, substantially perpendicular to the first direction and to the second direction, the third plurality of antennas (220-a, 220-b, 220-c) comprising:
at least one main third antenna (220-a); and
one or more summation third antennas (220-b, 220-c);
at least one third RF receive path (320) connected to the main third antenna (220-a) only;
a fourth antenna array (230) comprising a fourth plurality of antennas (240-a, 240-b, 240-c) facing a fourth direction that is substantially opposite the third direction, the fourth antenna array (230) being positioned substantially opposite the third antenna array (210), and the fourth plurality of antennas (240-a, 240-b, 240-c) comprising:
at least one main fourth antenna (240-a); and
one or more summation fourth antennas (240-b, 240-c);
at least one fourth RF receive path (325) connected to the main fourth antenna (240-a) only; and
one or more second common RF receive paths (330), each second common RF receive path of the second common RF receive paths (330) being connected to a second distinct pair of substantially oppositely-positioned antennas comprising a given summation third antenna of the summation third antennas (220-b, 220-c) and a given summation fourth antenna of the summation fourth antennas (240-b, 240-c), so that a third signal received by the given summation third antenna and a fourth signal received by the given summation fourth antenna are combined into a respective second common signal.

3. The antenna and receiver system (300) of claim 2, wherein each of the common RF receive paths (315), the second common RF receive paths (330), the first RF receive path (305), the second RF receive path (310), the third RF receive path (320) and the fourth RF receive path (325) include: a RF front-end (340), a down-converter (345), an analog to digital converter (350) and an intermediate-frequency (IF) processing resource (355).

4. The antenna and receiver system (300) of claim 2, wherein a combination of the first antenna array (110), the second antenna array (130), the third antenna array (210) and the fourth antenna array (230) covers 360 degrees.

5. A radio direction-finding system (400), comprising the antenna and receiver system (300) of claim 1, and a processing circuitry (410) configured to:
receive (A) main output signals from (a) the first RF receive path (305), and (b) the second RF receive path (310), and (B) common output signals from the common RF receive paths (315);
upon a transmitting entity transmitting radio signals from a given direction, being substantially the first direction or substantially the second direction, analyze the main output signals to provide a coarse determination of the given direction; and
upon providing the coarse determination of the given direction, provide a fine determination of the given direction utilizing the common output signals and a selected main output signal, of the main output signals, associated with the coarse determination of the given direction.

6. A radio direction-finding system (400), comprising the antenna and receiver system (300) of claim 2, and a processing circuitry (410) configured to:
receive (A) main output signals from (a) the first RF receive path (305), (b) the second RF receive path (310), (c) the third RF receive path (320) and (d) the fourth RF receive path (325), and (B) common output signals from (e) the common RF receive paths (315) and (f) the second common RF receive paths (330);
upon a transmitting entity transmitting radio signals from a given direction, analyze the main output signals to provide a coarse determination of the given direction; and
upon providing the coarse determination of the given direction, provide a fine determination of the given direction utilizing the common output signals associated with the coarse determination of the given direction, and a selected main output signal, of the main output signals, associated with the coarse determination of the given direction.

7. A radio direction-finding method (500), comprising:
receiving (504) (A) main output signals from (a) at least one first radio-frequency (RF) receive path (305), and (b) at least one second RF receive path (310), and (B) common output signals from one or more common RF receive paths (315) ;
upon a transmitting entity transmitting radio signals from a given direction, being substantially a first direction or substantially a second direction that is substantially opposite the first direction, analyzing (508) the main output signals to provide a coarse determination of the given direction; and
upon providing the coarse determination of the given direction, providing (512) a fine determination of the given direction utilizing the common output signals and a selected main output signal, of the main output signals, associated with the coarse determination of the given direction;
wherein the first RF receive path (305) is connected to a main first antenna (120-a) only, the main first antenna (120-a) being included in a first antenna array (110) comprising a first plurality of antennas (120-a, 120-b, 120-c) facing the first direction;
wherein the second RF receive path (310) is connected to a main second antenna (140-a) only, the main second antenna (140-a) being included in a second antenna array (130) comprising a second plurality of antennas (140-a, 140-b, 140-c) facing the second direction, the second antenna array (130) being positioned substantially opposite the first antenna array (110); and
wherein each common RF receive path of the common RF receive paths (315) is connected to a distinct pair of substantially oppositely-positioned antennas comprising a given summation first antenna of one or more summation first antennas (120-b, 120-c) of the first plurality of antennas (120-a, 120-b, 120-c) and a given summation second antenna of one or more summation second antennas (140-b, 140-c) of the second plurality of antennas (140-a, 140-b, 140-c), so that a first signal received by the given summation first antenna and a second signal received by the given summation second antenna are combined into a respective common signal.

8. The radio direction-finding method (500) of claim 7, wherein the coarse determination is provided by performing amplitude-based coarse direction-finding (DF).

9. The radio direction-finding method (500) of claim 7, wherein the fine determination is provided by performing interferometry.

10. A radio direction-finding method (600), comprising:
receiving (604) (A) main output signals from (a) at least one first radio-frequency (RF) receive path (305), (b) at least one second RF receive path (310), (c) at least one third RF receive path (320) and (d) at least one fourth RF receive path (325), and (B) common output signals from (e) one or more common RF receive paths (315) and (f) one or more second common RF receive paths (330);
upon a transmitting entity transmitting radio signals from a given direction, analyzing (608) the main output signals to provide a coarse determination of the given direction; and
upon providing the coarse determination of the given direction, providing (612) a fine determination of the given direction utilizing the common output signals associated with the coarse determination of the given direction, and a selected main output signal, of the main output signals, associated with the coarse determination of the given direction;
wherein the first RF receive path (305) is connected to a main first antenna (120-a) only, the main first antenna (120-a) being included in a first antenna array (110) comprising a first plurality of antennas (120-a, 120-b, 120-c) facing a first direction;
wherein the second RF receive path (310) is connected to a main second antenna (140-a) only, the main second antenna (140-a) being included in a second antenna array (130) comprising a second plurality of antennas (140-a, 140-b, 140-c) facing a second direction that is substantially opposite the first direction, the second antenna array (130) being positioned substantially opposite the first antenna array (110);
wherein each common RF receive path of the common RF receive paths (315) is connected to a distinct pair of substantially oppositely-positioned antennas comprising a given summation first antenna of one or more summation first antennas (120-b, 120-c) of the first plurality of antennas (120-a, 120-b, 120-c) and a given summation second antenna of one or more summation second antennas (140-b, 140-c) of the second plurality of antennas (140-a, 140-b, 140-c), so that a first signal received by the given summation first antenna and a second signal received by the given summation second antenna are combined into a respective common signal;
wherein the third RF receive path (320) is connected to a main third antenna (220-a) only, the main third antenna (220-a) being included in a third antenna array (210) comprising a third plurality of antennas (220-a, 220-b, 220-c) facing a third direction, substantially perpendicular to the first direction and to the second direction;
wherein the fourth RF receive path (325) is connected to a main fourth antenna (240-a) only, the main fourth antenna (240-a) being included in a fourth antenna array (230) comprising a fourth plurality of antennas (240-a, 240-b, 240-c) facing a fourth direction that is substantially opposite the third direction, the fourth antenna array (230) being positioned substantially opposite the third antenna array (210); and
wherein each second common RF receive path of the second common RF receive paths (330) is connected to a second distinct pair of substantially oppositely-positioned antennas comprising a given summation third antenna of summation third antennas (220-b, 220-c) of the third plurality of antennas (220-a, 220-b, 220-c) and a given summation fourth antenna of summation fourth antennas (240-b, 240-c) of the fourth plurality of antennas (240-a, 240-b, 240-c), so that a third signal received by the given summation third antenna and a fourth signal received by the given summation fourth antenna are combined into a respective second common signal.

11. The radio direction-finding method (600) of claim 10, wherein each of the common RF receive paths (315), each of the second common RF receive paths (330), the first RF receive path (305), the second RF receive path (310), the third RF receive path (320) and the fourth RF receive path (325) include: a RF front-end (340), a down-converter (345), an analog to digital converter (350) and an intermediate-frequency (IF) processing resource (355).

12. The radio direction-finding method (600) of claim 10, wherein a combination of the first antenna array (110), the second antenna array (130), the third antenna array (210) and the fourth antenna array (230) covers 360 degrees.

13. The radio direction-finding method (600) of claim 10, wherein the coarse determination is provided by performing amplitude-based coarse direction-finding.

14. The radio direction-finding method (600) of claim 10, wherein the fine determination is provided by performing interferometry.

15. A non-transitory computer readable storage medium having computer readable program code embodied therewith, the computer readable program code, executable by processing circuitry (410) of a computer to perform a radio direction-finding method (600), comprising:
receiving (604) (A) main output signals from (a) at least one first radio-frequency (RF) receive path (305), (b) at least one second RF receive path (310), (c) at least one third RF receive path (320) and (d) at least one fourth RF receive path (325), and (B) common output signals from (e) one or more common RF receive paths (315) and (f) one or more second common RF receive paths (330);
upon a transmitting entity transmitting radio signals from a given direction, analyzing (608) the main output signals to provide a coarse determination of the given direction; and
upon providing the coarse determination of the given direction, providing (612) a fine determination of the given direction utilizing the common output signals associated with the coarse determination of the given direction, and a selected main output signal, of the main output signals, associated with the coarse determination of the given direction;
wherein the first RF receive path (305) is connected to a main first antenna (120-a) only, the main first antenna (120-a) being included in a first antenna array (110) comprising a first plurality of antennas (120-a, 120-b, 120-c) facing a first direction;
wherein the second RF receive path (310) is connected to a main second antenna (140-a) only, the main second antenna (140-a) being included in a second antenna array (130) comprising a second plurality of antennas (140-a, 140-b, 140-c) facing a second direction that is substantially opposite the first direction, the second antenna array (130) being positioned substantially opposite the first antenna array (110);
wherein each common RF receive path of the common RF receive paths (315) is connected to a distinct pair of substantially oppositely-positioned antennas comprising a given summation first antenna of one or more summation first antennas (120-b, 120-c) of the first plurality of antennas (120-a, 120-b, 120-c) and a given summation second antenna of one or more summation second antennas (140-b, 140-c) of the second plurality of antennas (140-a, 140-b, 140-c), so that a first signal received by the given summation first antenna and a second signal received by the given summation second antenna are combined into a respective common signal;
wherein the third RF receive path (320) is connected to a main third antenna (220-a) only, the main third antenna (220-a) being included in a third antenna array (210) comprising a third plurality of antennas (220-a, 220-b, 220-c) facing a third direction, substantially perpendicular to the first direction and to the second direction;
wherein the fourth RF receive path (325) is connected to a main fourth antenna (240-a) only, the main fourth antenna (240-a) being included in a fourth antenna array (230) comprising a fourth plurality of antennas (240-a, 240-b, 240-c) facing a fourth direction that is substantially opposite the third direction, the fourth antenna array (230) being positioned substantially opposite the third antenna array (210); and
wherein each second common RF receive path of the second common RF receive paths (330) is connected to a second distinct pair of substantially oppositely-positioned antennas comprising a given summation third antenna of summation third antennas (220-b, 220-c) of the third plurality of antennas (220-a, 220-b, 220-c) and a given summation fourth antenna of summation fourth antennas (240-b, 240-c) of the fourth plurality of antennas (240-a, 240-b, 240-c), so that a third signal received by the given summation third antenna and a fourth signal received by the given summation fourth antenna are combined into a respective second common signal.

## Patentansprüche

1. Antennen- und Empfängersystem (300), das Antennen- und Empfängersystem (300) umfassend:
ein erstes Antennenarray (110), umfassend eine erste Vielzahl von Antennen (120-a, 120-b, 120-c), die in eine erste Richtung weist, die erste Vielzahl von Antennen (120-a, 120-b, 120-c) umfassend:
mindestens eine erste Hauptantenne (120-a); und
eine oder mehrere erste Summationsantennen (120-b, 120-c);
mindestens einen ersten Hochfrequenz-Empfangspfad (HF-Empfangspfad) (305), der nur mit der ersten Hauptantenne (120-a) verbunden ist;
ein zweites Antennenarray (130), umfassend eine zweite Vielzahl von Antennen (140-a, 140-b, 140-c), die in eine zweite Richtung weist, die im Wesentlichen der ersten Richtung gegenüberliegt, wobei das zweite Antennenarray (130) im Wesentlichen gegenüber dem ersten Antennenarray (110) positioniert ist, und die zweite Vielzahl von Antennen (140-a, 140-b, 140-c) umfassend:
mindestens eine zweite Hauptantenne (140-a); und
eine oder mehrere zweite Summationsantennen (140-b, 140-c);
mindestens einen zweiten HF-Empfangspfad (310), der nur mit der zweiten Hauptantenne (140-a) verbunden ist; und
einen oder mehrere gemeinsame HF-Empfangspfade (315), wobei jeder gemeinsame HF-Empfangspfad der gemeinsamen HF-Empfangspfade (315) mit einem unterschiedlichen Paar von im Wesentlichen gegenüberliegend positionierten Antennen verbunden ist, umfassend eine gegebene erste Summationsantenne der ersten Summationsantennen (120-b, 120-c) und eine gegebene zweite Summationsantenne der zweiten Summationsantennen (140-b, 140-c), so dass ein erstes Signal, das durch die gegebene erste Summationsantenne empfangen wird, und ein zweites Signal, das durch die gegebene zweite Summationsantenne empfangen wird, zu einem jeweiligen gemeinsamen Signal kombiniert werden.

2. Antennen- und Empfängersystem (300) nach Anspruch 1, ferner umfassend:
ein drittes Antennenarray (210), umfassend eine dritte Vielzahl von Antennen (220-a, 220-b, 220-c), die in eine dritte Richtung weist, die im Wesentlichen senkrecht zu der ersten Richtung und zu der zweiten Richtung ist, die dritte Vielzahl von Antennen (220-a, 220-b, 220-c) umfassend:
mindestens eine dritte Hauptantenne (220-a); und
eine oder mehrere dritte Summationsantennen (220-b, 220-c);
mindestens einen dritten HF-Empfangspfad (320), der nur mit der dritten Hauptantenne (220-a) verbunden ist;
ein viertes Antennenarray (230), umfassend eine vierte Vielzahl von Antennen (240-a, 240-b, 240-c), die in eine vierte Richtung weist, die im Wesentlichen der dritten Richtung gegenüberliegt, wobei das vierte Antennenarray (230) im Wesentlichen gegenüber dem dritten Antennenarray (210) positioniert ist, und die vierte Vielzahl von Antennen (240-a, 240-b, 240-c) umfassend:
mindestens eine vierte Hauptantenne (240-a); und
eine oder mehrere vierte Summationsantennen (240-b, 240-c);
mindestens einen vierten HF-Empfangspfad (325), der nur mit der vierten Hauptantenne (240-a) verbunden ist; und
einen oder mehrere zweite gemeinsame HF-Empfangspfade (330), wobei jeder zweite gemeinsame HF-Empfangspfad der zweiten gemeinsamen HF-Empfangspfade (330) mit einem zweiten unterschiedlichen Paar von im Wesentlichen gegenüberliegend positionierten Antennen verbunden ist, umfassend eine gegebene dritte Summationsantenne der dritten Summationsantennen (220-b, 220-c) und eine gegebene vierte Summationsantenne der vierten Summationsantennen (240-b, 240-c), so dass ein drittes Signal, das durch die gegebene dritte Summationsantenne empfangen wird, und ein viertes Signal, das durch die vierte Summationsantenne empfangen wird, zu einem jeweiligen zweiten gemeinsamen Signal kombiniert werden.

3. Antennen- und Empfängersystem (300) nach Anspruch 2, wobei jeder der gemeinsamen HF-Empfangspfade (315), der zweiten gemeinsamen HF-Empfangspfade (330), der erste HF-Empfangspfad (305), der zweite HF-Empfangspfad (310), der dritte HF-Empfangspfad (320) und der vierte HF-Empfangspfad (325) einschließt: ein HF-Eingangsteil (340), einen Abwärtswandler (345), einen Analog-Digital-Wandler (350) und eine Zwischenfrequenz-Verarbeitungsressource (ZF-Verarbeitungsressource) (355).

4. Antennen- und Empfängersystem (300) nach Anspruch 2, wobei eine Kombination aus dem ersten Antennenarray (110), dem zweiten Antennenarray (130), dem dritten Antennenarray (210) und dem vierten Antennenarray (230) 360 Grad abdeckt.

5. Funkpeilsystem (400), umfassend das Antennen- und Empfängersystem (300) nach Anspruch 1 und eine Verarbeitungsschaltung (410) die konfiguriert ist zum:
Empfangen von (A) Hauptausgangssignalen von (a) dem ersten HF-Empfangspfad (305) und (b) dem zweiten HF-Empfangspfad (310) und (B) gemeinsamen Ausgangssignalen von den gemeinsamen HF-Empfangspfaden (315),
wenn eine sendende Einheit Funksignale aus einer gegebenen Richtung sendet, die im Wesentlichen die erste Richtung oder im Wesentlichen die zweite Richtung ist, Analysieren der Hauptausgangssignale, um eine Grobbestimmung der gegebenen Richtung bereitzustellen; und
nach dem Bereitstellen der Grobbestimmung der gegebenen Richtung, Bereitstellen einer Feinbestimmung der gegebenen Richtung unter Nutzung der gemeinsamen Ausgangssignale und eines ausgewählten Hauptausgangssignals der Hauptausgangssignale, das mit der Grobbestimmung der gegebenen Richtung verknüpft ist.

6. Funkpeilsystem (400), umfassend das Antennen- und Empfängersystem (300) nach Anspruch 2 und eine Verarbeitungsschaltung (410), die konfiguriert ist zum:
Empfangen von (A) Hauptausgangssignalen von (a) dem ersten HF-Empfangspfad (305), (b) dem zweiten HF-Empfangspfad (310), (c) dem dritten HF-Empfangspfad (320) und (d) dem vierten HF-Empfangspfad (325) und (B) gemeinsamen Ausgangssignalen von (e) den gemeinsamen HF-Empfangspfaden (315) und (f) den zweiten gemeinsamen HF-Empfangspfaden (330);
nachdem eine sendende Einheit Funksignale aus einer gegebenen Richtung sendet, Analysieren der Hauptausgangssignale, um eine Grobbestimmung der gegebenen Richtung bereitzustellen; und
nach dem Bereitstellen der Grobbestimmung der gegebenen Richtung, Bereitstellen einer Feinbestimmung der gegebenen Richtung unter Nutzung der gemeinsamen Ausgangssignale, die mit der Grobbestimmung der gegebenen Richtung verknüpft sind, und eines ausgewählten Hauptausgangssignals der Hauptausgangssignale, die mit der Grobbestimmung der gegebenen Richtung verknüpft sind.

7. Funkpeilungsverfahren (500), umfassend:
Empfangen (504) (A) von Hauptausgangssignalen von (a) mindestens einem ersten Hochfrequenz-Empfangspfad (HF-Empfangspfad) (305) und (b) mindestens einem zweiten HF-Empfangspfad (310) und (B) von gemeinsamen Ausgangssignalen von einem oder mehreren gemeinsamen HF-Empfangspfaden (315),
nachdem eine sendende Einheit Funksignale aus einer gegebenen Richtung sendet, die im Wesentlichen eine erste Richtung oder im Wesentlichen eine zweite Richtung ist, die der ersten Richtung im Wesentlichen gegenüberliegt, Analysieren (508) der Hauptausgangssignale, um eine Grobbestimmung der gegebenen Richtung bereitzustellen; und
nach dem Bereitstellen der Grobbestimmung der gegebenen Richtung, Bereitstellen (512) einer Feinbestimmung der gegebenen Richtung unter Nutzung der gemeinsamen Ausgangssignale und eines ausgewählten Hauptausgangssignals der Hauptausgangssignale, das mit der Grobbestimmung der gegebenen Richtung verknüpft ist;
wobei der erste HF-Empfangspfad (305) nur mit einer ersten Hauptantenne (120-a) verbunden ist, wobei die erste Hauptantenne (120-a) in einem ersten Antennenarray (110) eingeschlossen ist, umfassend eine erste Vielzahl von Antennen (120-a, 120-b, 120-c), die in die erste Richtung weist;
wobei der zweite HF-Empfangspfad (310) nur mit einer zweiten Hauptantenne (140-a) verbunden ist, wobei die zweite Hauptantenne (140-a) in einem zweiten Antennenarray (130) eingeschlossen ist, umfassend eine zweite Vielzahl von Antennen (140-a, 140-b, 140-c), die in die zweite Richtung weist, wobei das zweite Antennenarray (130) im Wesentlichen gegenüber dem ersten Antennenarray (110) positioniert ist; und
wobei jeder gemeinsame HF-Empfangspfad der gemeinsamen HF-Empfangspfade (315) mit einem unterschiedlichen Paar von im Wesentlichen gegenüberliegend positionierten Antennen verbunden ist, umfassend eine gegebene erste Summationsantenne von einer oder mehreren ersten Summationsantennen (120-b, 120-c) der ersten Vielzahl von Antennen (120-a, 120-b, 120-c) und eine gegebene zweite Summationsantenne von einer oder mehreren zweiten Summationsantennen (140-b, 140-c) der zweiten Vielzahl von Antennen (140-a, 140-b, 140-c), so dass ein erstes Signal, das durch die gegebene erste Summationsantenne empfangen wird, und ein zweites Signal, das durch die gegebene zweite Summationsantenne empfangen wird, zu einem jeweiligen gemeinsamen Signal kombiniert werden.

8. Funkpeilungsverfahren (500) nach Anspruch 7, wobei die Grobbestimmung durch das Durchführen einer amplitudenbasierten Grobpeilung (DF) bereitgestellt wird.

9. Funkpeilungsverfahren (500) nach Anspruch 7, wobei die Feinbestimmung durch das Durchführen einer Interferometrie bereitgestellt wird.

10. Funkpeilungsverfahren (600), umfassend:
Empfangen (604) (A) von Hauptausgangssignalen von (a) mindestens einem ersten Hochfrequenz-Empfangspfad (HF-Empfangspfad) (305), (b) mindestens einem zweiten HF-Empfangspfad (310), (c) mindestens einem dritten HF-Empfangspfad (320) und (d) mindestens einem vierten HF-Empfangspfad (325), und (B) von gemeinsamen Ausgangssignalen von (e) einem oder mehreren gemeinsamen HF-Empfangspfaden (315) und (f) einem oder mehreren zweiten gemeinsamen HF-Empfangspfaden (330);
nachdem eine sendende Einheit Funksignale aus einer gegebenen Richtung sendet, Analysieren (608) der Hauptausgangssignale, um eine Grobbestimmung der gegebenen Richtung bereitzustellen; und
nach dem Bereitstellen der Grobbestimmung der gegebenen Richtung, Bereitstellen (612) einer Feinbestimmung der gegebenen Richtung unter Nutzung der gemeinsamen Ausgangssignale, die mit der Grobbestimmung der gegebenen Richtung verknüpft sind, und eines ausgewählten Hauptausgangssignals der Hauptausgangssignale, das mit der Grobbestimmung der gegebenen Richtung verknüpft ist;
wobei der erste HF-Empfangspfad (305) nur mit einer ersten Hauptantenne (120-a) verbunden ist, wobei die erste Hauptantenne (120-a) in einem ersten Antennenarray (110) eingeschlossen ist, umfassend eine erste Vielzahl von Antennen (120-a, 120-b, 120-c), die in eine erste Richtung weist;
wobei der zweite HF-Empfangspfad (310) nur mit einer zweiten Hauptantenne (140-a) verbunden ist, wobei die zweite Hauptantenne (140-a) in einem zweiten Antennenarray (130) eingeschlossen ist, umfassend eine zweite Vielzahl von Antennen (140-a, 140-b, 140-c), die in eine zweite Richtung weist, die im Wesentlichen der ersten Richtung gegenüberliegt, wobei das zweite Antennenarray (130) im Wesentlichen gegenüber dem ersten Antennenarray (110) positioniert ist;
wobei jeder gemeinsame HF-Empfangspfad der gemeinsamen HF-Empfangspfade (315) mit einem unterschiedlichen Paar von im Wesentlichen gegenüberliegend positionierten Antennen verbunden ist, umfassend eine gegebene erste Summationsantenne von einer oder mehreren ersten Summationsantennen (120-b, 120-c) der ersten Vielzahl von Antennen (120-a, 120-b, 120-c) und eine gegebene zweite Summationsantenne von einer oder mehreren zweiten Summationsantennen (140-b, 140-c) der zweiten Vielzahl von Antennen (140-a, 140-b, 140-c), so dass ein erstes Signal, das durch die gegebene erste Summationsantenne empfangen wird, und ein zweites Signal, das durch die gegebene zweite Summationsantenne empfangen wird, zu einem jeweiligen gemeinsamen Signal kombiniert werden;
wobei der dritte HF-Empfangspfad (320) nur mit einer dritten Hauptantenne (220-a) verbunden ist, wobei die dritte Hauptantenne (220-a) in einem dritten Antennenarray (210) eingeschlossen ist, umfassend eine dritte Vielzahl von Antennen (220-a, 220-b, 220-c), die in eine dritte Richtung weist, die im Wesentlichen senkrecht zu der ersten Richtung und zu der zweiten Richtung ist;
wobei der vierte HF-Empfangspfad (325) nur mit einer vierten Hauptantenne (240-a) verbunden ist, wobei die vierte Hauptantenne (240-a) in einem vierten Antennenarray (230) eingeschlossen ist, umfassend eine vierte Vielzahl von Antennen (240-a, 240-b, 240-c), die in eine vierte Richtung weist, die im Wesentlichen der dritten Richtung gegenüberliegt, wobei das vierte Antennenarray (230) im Wesentlichen gegenüber dem dritten Antennenarray (210) positioniert ist; und
wobei jeder zweite gemeinsame HF-Empfangspfad der zweiten gemeinsamen HF-Empfangspfade (330) mit einem zweiten unterschiedlichen Paar von im Wesentlichen gegenüberliegend positionierten Antennen verbunden ist, umfassend eine gegebene dritte Summationsantenne von dritten Summationsantennen (220-b, 220-c) der dritten Vielzahl von Antennen (220-a, 220-b, 220-c) und eine gegebene vierte Summationsantenne von vierten Summationsantennen (240-b, 240-c) der vierten Vielzahl von Antennen (240-a, 240-b, 240-c), so dass ein drittes Signal, das durch die gegebene dritte Summationsantenne empfangen wird, und ein viertes Signal, das durch die gegebene vierte Summationsantenne empfangen wird, zu einem jeweiligen zweiten gemeinsamen Signal kombiniert werden.

11. Funkpeilungsverfahren (600) nach Anspruch 10, wobei jeder der gemeinsamen HF-Empfangspfade (315), jeder der zweiten gemeinsamen HF-Empfangspfade (330), der erste HF-Empfangspfad (305), der zweite HF-Empfangspfad (310), der dritte HF-Empfangspfad (320) und der vierte HF-Empfangspfad (325) einschließen: ein HF-Eingangsteil (340), einen Abwärtswandler (345), einen Analog-Digital-Wandler (350) und eine Zwischenfrequenz-Verarbeitungsressource (ZF-Verarbeitungsressource) (355).

12. Funkpeilungsverfahren (600) nach Anspruch 10, wobei eine Kombination aus dem ersten Antennenarray (110), dem zweiten Antennenarray (130), dem dritten Antennenarray (210) und dem vierten Antennenarray (230) 360 Grad abdeckt.

13. Funkpeilungsverfahren (600) nach Anspruch 10, wobei die Grobbestimmung durch das Durchführen einer amplitudenbasierten Grobpeilung bereitgestellt wird.

14. Funkpeilungsverfahren (600) nach Anspruch 10, wobei die Feinbestimmung durch das Durchführen einer Interferometrie bereitgestellt wird.

15. Nicht flüchtiges, computerlesbares Speichermedium, das computerlesbaren Programmcode darin integriert aufweist, der computerlesbare Programmcode, der durch die Verarbeitungsschaltung (410) eines Computers ausführbar ist, um ein Funkpeilungsverfahren (600) durchzuführen, umfassend:
Empfangen (604) (A) von Hauptausgangssignalen von (a) mindestens einem ersten Hochfrequenz-Empfangspfad (HF-Empfangspfad) (305), (b) mindestens einem zweiten HF-Empfangspfad (310), (c) mindestens einem dritten HF-Empfangspfad (320) und (d) mindestens einem vierten HF-Empfangspfad (325), und (B) von gemeinsamen Ausgangssignalen von (e) einem oder mehreren gemeinsamen HF-Empfangspfaden (315) und (f) einem oder mehreren zweiten gemeinsamen HF-Empfangspfaden (330);
nachdem eine sendende Einheit Funksignale aus einer gegebenen Richtung sendet, Analysieren (608) der Hauptausgangssignale, um eine Grobbestimmung der gegebenen Richtung bereitzustellen; und
nach dem Bereitstellen der Grobbestimmung der gegebenen Richtung, Bereitstellen (612) einer Feinbestimmung der gegebenen Richtung unter Nutzung der gemeinsamen Ausgangssignale, die mit der Grobbestimmung der gegebenen Richtung verknüpft sind, und eines ausgewählten Hauptausgangssignals der Hauptausgangssignale, das mit der Grobbestimmung der gegebenen Richtung verknüpft ist;
wobei der erste HF-Empfangspfad (305) nur mit einer ersten Hauptantenne (120-a) verbunden ist, wobei die erste Hauptantenne (120-a) in einem ersten Antennenarray (110) eingeschlossen ist, umfassend eine erste Vielzahl von Antennen (120-a, 120-b, 120-c), die in eine erste Richtung weist;
wobei der zweite HF-Empfangspfad (310) nur mit einer zweiten Hauptantenne (140-a) verbunden ist, wobei die zweite Hauptantenne (140-a) in einem zweiten Antennenarray (130) eingeschlossen ist, umfassend eine zweite Vielzahl von Antennen (140-a, 140-b, 140-c), die in eine zweite Richtung weist, die im Wesentlichen der ersten Richtung gegenüberliegt, wobei das zweite Antennenarray (130) im Wesentlichen gegenüber dem ersten Antennenarray (110) positioniert ist;
wobei jeder gemeinsame HF-Empfangspfad der gemeinsamen HF-Empfangspfade (315) mit einem unterschiedlichen Paar von im Wesentlichen gegenüberliegend positionierten Antennen verbunden ist, umfassend eine gegebene erste Summationsantenne von einer oder mehreren ersten Summationsantennen (120-b, 120-c) der ersten Vielzahl von Antennen (120-a, 120-b, 120-c) und eine gegebene zweite Summationsantenne von einer oder mehreren zweiten Summationsantennen (140-b, 140-c) der zweiten Vielzahl von Antennen (140-a, 140-b, 140-c), so dass ein erstes Signal, das durch die gegebene erste Summationsantenne empfangen wird, und ein zweites Signal, das durch die gegebene zweite Summationsantenne empfangen wird, zu einem jeweiligen gemeinsamen Signal kombiniert werden;
wobei der dritte HF-Empfangspfad (320) nur mit einer dritten Hauptantenne (220-a) verbunden ist, wobei die dritte Hauptantenne (220-a) in einem dritten Antennenarray (210) eingeschlossen ist, umfassend eine dritte Vielzahl von Antennen (220-a, 220-b, 220-c), die in eine dritte Richtung weist, die im Wesentlichen senkrecht zu der ersten Richtung und zu der zweiten Richtung ist;
wobei der vierte HF-Empfangspfad (325) nur mit einer vierten Hauptantenne (240-a) verbunden ist, wobei die vierte Hauptantenne (240-a) in einem vierten Antennenarray (230) eingeschlossen ist, umfassend eine vierte Vielzahl von Antennen (240-a, 240-b, 240-c), die in eine vierte Richtung weist, die im Wesentlichen der dritten Richtung gegenüberliegt, wobei das vierte Antennenarray (230) im Wesentlichen gegenüber dem dritten Antennenarray (210) positioniert ist; und
wobei jeder zweite gemeinsame HF-Empfangspfad der zweiten gemeinsamen HF-Empfangspfade (330) mit einem zweiten unterschiedlichen Paar von im Wesentlichen gegenüberliegend positionierten Antennen verbunden ist, umfassend eine gegebene dritte Summationsantenne von dritten Summationsantennen (220-b, 220-c) der dritten Vielzahl von Antennen (220-a, 220-b, 220-c) und eine gegebene vierte Summationsantenne von vierten Summationsantennen (240-b, 240-c) der vierten Vielzahl von Antennen (240-a, 240-b, 240-c), so dass ein drittes Signal, das durch die gegebene dritte Summationsantenne empfangen wird, und ein viertes Signal, das durch die gegebene vierte Summationsantenne empfangen wird, zu einem jeweiligen zweiten gemeinsamen Signal kombiniert werden.

## Revendications

1. Système d'antennes et de récepteur (300), le système d'antennes et de récepteur (300) comprenant :
un premier réseau d'antennes (110) comprenant une première pluralité d'antennes (120-a, 120-b, 120-c) orientées dans une première direction, la première pluralité d'antennes (120-a, 120-b, 120-c) comprenant :
au moins une première antenne principale (120-a) ; et
une ou plusieurs premières antennes de sommation (120-b, 120-c) ;
au moins une première voie de réception de radiofréquences (RF) (305) connectée uniquement à la première antenne principale (120-a) ;
un deuxième réseau d'antennes (130) comprenant une deuxième pluralité d'antennes (140-a, 140-b, 140-c) orientées dans une deuxième direction qui est sensiblement opposée à la première direction, le deuxième réseau d'antennes (130) étant positionné de manière sensiblement opposée au premier réseau d'antennes (110), et la deuxième pluralité d'antennes (140-a, 140-b, 140-c) comprenant :
au moins une deuxième antenne principale (140-a) ; et
une ou plusieurs deuxièmes antennes de sommation (140-b, 140-c) ;
au moins une deuxième voie de réception RF (310) connectée uniquement à la deuxième antenne principale (140-a) ; et
une ou plusieurs voies de réception RF communes (315), chaque voie de réception RF commune parmi les voies de réception RF communes (315) étant connectée à une paire distincte d'antennes positionnées de manière sensiblement opposée, comprenant une première antenne de sommation donnée parmi les premières antennes de sommation (120-b, 120-c) et une deuxième antenne de sommation donnée parmi les deuxièmes antennes de sommation (140-b, 140-c), de sorte qu'un premier signal reçu par la première antenne de sommation donnée et un deuxième signal reçu par la deuxième antenne de sommation donnée sont combinés en un signal commun respectif.

2. Système d'antennes et de récepteur (300) selon la revendication 1, comprenant en outre :
un troisième réseau d'antennes (210) comprenant une troisième pluralité d'antennes (220-a, 220-b, 220-c) orientées dans une troisième direction, sensiblement perpendiculaire à la première direction et à la deuxième direction, la troisième pluralité d'antennes (220-a, 220-b, 220-c) comprenant :
au moins une troisième antenne principale (220-a) ; et
une ou plusieurs troisièmes antennes de sommation (220-b, 220-c) ;
au moins une troisième voie de réception RF (320) connectée uniquement à la troisième antenne principale (220-a) ;
un quatrième réseau d'antennes (230) comprenant une quatrième pluralité d'antennes (240-a, 240-b, 240-c) orientées dans une quatrième direction qui est sensiblement opposée à la troisième direction, le quatrième réseau d'antennes (230) étant positionné de manière sensiblement opposée au troisième réseau d'antennes (210), et la quatrième pluralité d'antennes (240-a, 240-b, 240-c) comprenant :
au moins une quatrième antenne principale (240-a) ; et
une ou plusieurs quatrièmes antennes de sommation (240-b, 240-c) ;
au moins une quatrième voie de réception RF (325) connectée uniquement à la quatrième antenne principale (240-a) ; et
une ou plusieurs secondes voies de réception RF communes (330), chaque seconde voie de réception RF commune parmi les secondes voies de réception RF communes (330) étant connectée à une seconde paire distincte d'antennes positionnées de manière sensiblement opposée, comprenant une troisième antenne de sommation donnée parmi les troisièmes antennes de sommation (220-b, 220-c) et une quatrième antenne de sommation donnée parmi les quatrièmes antennes de sommation (240-b, 240-c), de sorte qu'un troisième signal reçu par la troisième antenne de sommation donnée et un quatrième signal reçu par la quatrième antenne de sommation donnée sont combinés en un second signal commun respectif.

3. Système d'antennes et de récepteur (300) selon la revendication 2, dans lequel chaque voie de réception RF commune parmi les voies de réception RF communes (315), les secondes voies de réception RF communes (330), la première voie de réception RF (305), la deuxième voie de réception RF (310), la troisième voie de réception RF (320) et la quatrième voie de réception RF (325) comportent : un frontal RF (340), un changeur abaisseur de fréquence (345), un convertisseur analogique-numérique (350) et une ressource de traitement de fréquence intermédiaire (IF) (355).

4. Système d'antennes et de récepteur (300) selon la revendication 2, dans lequel une combinaison du premier réseau d'antennes (110), du deuxième réseau d'antennes (130), du troisième réseau d'antennes (210) et du quatrième réseau d'antennes (230) couvre 360 degrés.

5. Système de radiogoniométrie (400), comprenant le système d'antennes et de récepteur (300) selon la revendication 1, et une circuiterie de traitement (410) configurée pour :
recevoir (A) des signaux de sortie principaux provenant (a) de la première voie de réception RF (305) et (b) de la deuxième voie de réception RF (310), et (B) des signaux de sortie communs provenant des voies de réception RF communes (315) ;
lorsqu'une entité de transmission transmet des signaux radio à partir d'une direction donnée étant sensiblement la première direction ou sensiblement la deuxième direction, analyser les principaux signaux de sortie pour fournir une détermination grossière de la direction donnée ; et
lors de la fourniture de la détermination grossière de la direction donnée, fournir une détermination parfaite de la direction donnée à l'aide des signaux de sortie communs et d'un signal de sortie principal sélectionné, parmi les signaux de sortie principaux, associé à la détermination grossière de la direction donnée.

6. Système de radiogoniométrie (400), comprenant le système d'antennes et de récepteur (300) selon la revendication 2, et une circuiterie de traitement (410) configurée pour :
recevoir (A) des signaux de sortie principaux provenant (a) de la première voie de réception RF (305), (b) de la deuxième voie de réception RF (310), (c) de la troisième voie de réception RF (320) et (d) de la quatrième voie de réception RF (325), et (B) des signaux de sortie communs provenant (e) des voies de réception RF communes (315) et (f) des secondes voies de réception RF communes (330) ;
lorsqu'une entité de transmission transmet des signaux radio à partir d'une direction donnée, analyser les principaux signaux de sortie pour fournir une détermination grossière de la direction donnée ; et
lors de la fourniture de la détermination grossière de la direction donnée, fournir une détermination parfaite de la direction donnée à l'aide des signaux de sortie communs associés à la détermination grossière de la direction donnée, et d'un signal de sortie principal sélectionné, parmi les signaux de sortie principaux, associé à la détermination grossière de la direction donnée.

7. Procédé de radiogoniométrie (500), comprenant :
la réception (504) (A) de signaux de sortie principaux provenant (a) d'au moins une première voie de réception de radiofréquences (RF) (305) et (b) d'au moins une deuxième voie de réception RF (310), et (B) de signaux de sortie communs provenant d'une ou plusieurs voies de réception RF communes (315) ;
lorsqu'une entité de transmission transmet des signaux radio à partir d'une direction donnée étant sensiblement une première direction ou sensiblement une deuxième direction qui est sensiblement opposée à la première direction, l'analyse (508) des principaux signaux de sortie pour fournir une détermination grossière de la direction donnée ; et
lors de la fourniture de la détermination grossière de la direction donnée, la fourniture (512) d'une détermination parfaite de la direction donnée à l'aide des signaux de sortie communs et d'un signal de sortie principal sélectionné, parmi les signaux de sortie principaux, associé à la détermination grossière de la direction donnée ;
dans lequel la première voie de réception RF (305) est connectée uniquement à une première antenne principale (120-a), la première antenne principale (120-a) étant comprise dans un premier réseau d'antennes (110) comprenant une première pluralité d'antennes (120-a, 120-b, 120-c) orientées dans la première direction ;
dans lequel la deuxième voie de réception RF (310) est connectée uniquement à une deuxième antenne principale (140-a), la deuxième antenne principale (140-a) étant comprise dans un deuxième réseau d'antennes (130) comprenant une deuxième pluralité d'antennes (140-a, 140-b, 140-c) orientées dans la deuxième direction, le deuxième réseau d'antennes (130) étant positionné de manière sensiblement opposée au premier réseau d'antennes (110) ; et
dans lequel chaque voie de réception RF commune parmi les voies de réception RF communes (315) est connectée à une paire distincte d'antennes positionnées de manière sensiblement opposée, comprenant une première antenne de sommation donnée parmi la ou les premières antennes de sommation (120-b, 120-c) de la première pluralité d'antennes (120-a, 120-b, 120-c) et une deuxième antenne de sommation donnée parmi la ou les deuxièmes antennes de sommation (140-b, 140-c) de la deuxième pluralité d'antennes (140-a, 140-b, 140-c), de sorte qu'un premier signal reçu par la première antenne de sommation donnée et un deuxième signal reçu par la deuxième antenne de sommation donnée sont combinés en un signal commun respectif.

8. Procédé de radiogoniométrie (500) selon la revendication 7, dans lequel la détermination grossière est fournie en effectuant une radiogoniométrie (DF) grossière basée sur l'amplitude.

9. Procédé de radiogoniométrie (500) selon la revendication 7, dans lequel la détermination parfaite est fournie en effectuant une interférométrie.

10. Procédé de radiogoniométrie (600), comprenant :
la réception (604) (A) de signaux de sortie principaux provenant (a) d'au moins une première voie de réception de radiofréquences (RF) (305), (b) d'au moins une deuxième voie de réception RF (310), (c) d'au moins une troisième voie de réception RF (320) et (d) d'au moins une quatrième voie de réception RF (325), et (B) de signaux de sortie communs provenant (e) d'une ou plusieurs voies de réception RF communes (315) et (f) d'une ou plusieurs secondes voies de réception RF communes (330) ;
lorsqu'une entité de transmission transmet des signaux radio à partir d'une direction donnée, l'analyse (608) des principaux signaux de sortie pour fournir une détermination grossière de la direction donnée ; et
lors de la fourniture de la détermination grossière de la direction donnée, la fourniture (612) d'une détermination parfaite de la direction donnée à l'aide des signaux de sortie communs associés à la détermination grossière de la direction donnée, et d'un signal de sortie principal sélectionné, parmi les signaux de sortie principaux, associé à la détermination grossière de la direction donnée ;
dans lequel la première voie de réception RF (305) est connectée uniquement à une première antenne principale (120-a), la première antenne principale (120-a) étant comprise dans un premier réseau d'antennes (110) comprenant une première pluralité d'antennes (120-a, 120-b, 120-c) orientées dans une première direction ;
dans lequel la deuxième voie de réception RF (310) est connectée uniquement à une deuxième antenne principale (140-a), la deuxième antenne principale (140-a) étant comprise dans un deuxième réseau d'antennes (130) comprenant une deuxième pluralité d'antennes (140-a, 140-b, 140-c) orientées dans une deuxième direction qui est sensiblement opposée à la première direction, le deuxième réseau d'antennes (130) étant positionné de manière sensiblement opposée au premier réseau d'antennes (110) ;
dans lequel chaque voie de réception RF commune parmi les voies de réception RF communes (315) est connectée à une paire distincte d'antennes positionnées de manière sensiblement opposée, comprenant une première antenne de sommation donnée parmi la ou les premières antennes de sommation (120-b, 120-c) de la première pluralité d'antennes (120-a, 120-b, 120-c) et une deuxième antenne de sommation donnée parmi la ou les deuxièmes antennes de sommation (140-b, 140-c) de la deuxième pluralité d'antennes (140-a, 140-b, 140-c), de sorte qu'un premier signal reçu par la première antenne de sommation donnée et un deuxième signal reçu par la deuxième antenne de sommation donnée sont combinés en un signal commun respectif ;
dans lequel la troisième voie de réception RF (320) est connectée uniquement à une troisième antenne principale (220-a), la troisième antenne principale (220-a) étant comprise dans un troisième réseau d'antennes (210) comprenant une troisième pluralité d'antennes (220-a, 220-b, 220-c) orientées dans une troisième direction, sensiblement perpendiculaire à la première direction et à la deuxième direction ;
dans lequel la quatrième voie de réception RF (325) est connectée uniquement à une quatrième antenne principale (240-a), la quatrième antenne principale (240-a) étant comprise dans un quatrième réseau d'antennes (230) comprenant une quatrième pluralité d'antennes (240-a, 240-b, 240-c) orientées dans une quatrième direction qui est sensiblement opposée à la troisième direction, le quatrième réseau d'antennes (230) étant positionné de manière sensiblement opposée au troisième réseau d'antennes (210) ; et
dans lequel chaque seconde voie de réception RF commune parmi les secondes voies de réception RF communes (330) est connectée à une seconde paire distincte d'antennes positionnées de manière sensiblement opposée, comprenant une troisième antenne de sommation donnée parmi les troisièmes antennes de sommation (220-b, 220-c) de la troisième pluralité d'antennes (220-a, 220-b, 220-c) et une quatrième antenne de sommation donnée parmi les quatrièmes antennes de sommation (240-b, 240-c) de la quatrième pluralité d'antennes (240-a, 240-b, 240-c), de sorte qu'un troisième signal reçu par la troisième antenne de sommation donnée et un quatrième signal reçu par la quatrième antenne de sommation donnée sont combinés en un second signal commun respectif.

11. Procédé de radiogoniométrie (600) selon la revendication 10, dans lequel chaque voie de réception RF commune parmi les voies de réception RF communes (315), chaque seconde voie de réception RF commune parmi les secondes voies de réception RF communes (330), la première voie de réception RF (305), la deuxième voie de réception RF (310), la troisième voie de réception RF (320) et la quatrième voie de réception RF (325) comportent : un frontal RF (340), un changeur abaisseur de fréquence (345), un convertisseur analogique-numérique (350) et une ressource de traitement de fréquence intermédiaire (IF) (355).

12. Procédé de radiogoniométrie (600) selon la revendication 10, dans lequel une combinaison du premier réseau d'antennes (110), du deuxième réseau d'antennes (130), du troisième réseau d'antennes (210) et du quatrième réseau d'antennes (230) couvre 360 degrés.

13. Procédé de radiogoniométrie (600) selon la revendication 10, dans lequel la détermination grossière est fournie en effectuant une radiogoniométrie grossière basée sur l'amplitude.

14. Procédé de radiogoniométrie (600) selon la revendication 10, dans lequel la détermination parfaite est fournie en effectuant une interférométrie.

15. Support de stockage non transitoire lisible par ordinateur renfermant un code de programme lisible par ordinateur, le code de programme lisible par ordinateur, exécutable par une circuiterie de traitement (410) d'un ordinateur pour effectuer un procédé de radiogoniométrie (600), comprenant :
la réception (604) (A) de signaux de sortie principaux provenant (a) d'au moins une première voie de réception de radiofréquences (RF) (305), (b) d'au moins une deuxième voie de réception RF (310), (c) d'au moins une troisième voie de réception RF (320) et (d) d'au moins une quatrième voie de réception RF (325), et (B) de signaux de sortie communs provenant (e) d'une ou plusieurs voies de réception RF communes (315) et (f) d'une ou plusieurs secondes voies de réception RF communes (330) ;
lorsqu'une entité de transmission transmet des signaux radio à partir d'une direction donnée, l'analyse (608) des principaux signaux de sortie pour fournir une détermination grossière de la direction donnée ; et
lors de la fourniture de la détermination grossière de la direction donnée, la fourniture (612) d'une détermination parfaite de la direction donnée à l'aide des signaux de sortie communs associés à la détermination grossière de la direction donnée, et d'un signal de sortie principal sélectionné, parmi les signaux de sortie principaux, associé à la détermination grossière de la direction donnée ;
dans lequel la première voie de réception RF (305) est connectée uniquement à une première antenne principale (120-a), la première antenne principale (120-a) étant comprise dans un premier réseau d'antennes (110) comprenant une première pluralité d'antennes (120-a, 120-b, 120-c) orientées dans une première direction ;
dans lequel la deuxième voie de réception RF (310) est connectée uniquement à une deuxième antenne principale (140-a), la deuxième antenne principale (140-a) étant comprise dans un deuxième réseau d'antennes (130) comprenant une deuxième pluralité d'antennes (140-a, 140-b, 140-c) orientées dans une deuxième direction qui est sensiblement opposée à la première direction, le deuxième réseau d'antennes (130) étant positionné de manière sensiblement opposée au premier réseau d'antennes (110) ;
dans lequel chaque voie de réception RF commune parmi les voies de réception RF communes (315) est connectée à une paire distincte d'antennes positionnées de manière sensiblement opposée, comprenant une première antenne de sommation donnée parmi la ou les premières antennes de sommation (120-b, 120-c) de la première pluralité d'antennes (120-a, 120-b, 120-c) et une deuxième antenne de sommation donnée parmi la ou les deuxièmes antennes de sommation (140-b, 140-c) de la deuxième pluralité d'antennes (140-a, 140-b, 140-c), de sorte qu'un premier signal reçu par la première antenne de sommation donnée et un deuxième signal reçu par la deuxième antenne de sommation donnée sont combinés en un signal commun respectif ;
dans lequel la troisième voie de réception RF (320) est connectée uniquement à une troisième antenne principale (220-a), la troisième antenne principale (220-a) étant comprise dans un troisième réseau d'antennes (210) comprenant une troisième pluralité d'antennes (220-a, 220-b, 220-c) orientées dans une troisième direction, sensiblement perpendiculaire à la première direction et à la deuxième direction ;
dans lequel la quatrième voie de réception RF (325) est connectée uniquement à une quatrième antenne principale (240-a), la quatrième antenne principale (240-a) étant comprise dans un quatrième réseau d'antennes (230) comprenant une quatrième pluralité d'antennes (240-a, 240-b, 240-c) orientées dans une quatrième direction qui est sensiblement opposée à la troisième direction, le quatrième réseau d'antennes (230) étant positionné de manière sensiblement opposée au troisième réseau d'antennes (210) ; et
dans lequel chaque seconde voie de réception RF commune parmi les secondes voies de réception RF communes (330) est connectée à une seconde paire distincte d'antennes positionnées de manière sensiblement opposée, comprenant une troisième antenne de sommation donnée parmi les troisièmes antennes de sommation (220-b, 220-c) de la troisième pluralité d'antennes (220-a, 220-b, 220-c) et une quatrième antenne de sommation donnée parmi les quatrièmes antennes de sommation (240-b, 240-c) de la quatrième pluralité d'antennes (240-a, 240-b, 240-c), de sorte qu'un troisième signal reçu par la troisième antenne de sommation donnée et un quatrième signal reçu par la quatrième antenne de sommation donnée sont combinés en un second signal commun respectif.
